(19) Europäisches Patentamt
European Patent Office
Office européen des brevets

(11) **EP 0 699 325 B1**

(12) **EUROPEAN PATENT SPECIFICATION**

(45) Date of publication and mention
of the grant of the patent:
**02.12.1998 Bulletin 1998/49**

(21) Application number: **94913714.5**

(22) Date of filing: **27.04.1994**

(51) Int Cl.$^6$: **G07C 9/00**

(86) International application number:
**PCT/GB94/00900**

(87) International publication number:
**WO 94/25938 (10.11.1994 Gazette 1994/25)**

(54) **FINGERPRINT SENSOR**

**FINGERABDRUCKSENSOR**

**DETECTEUR D'EMPREINTES DIGITALES**

(84) Designated Contracting States:
**AT BE CH DE DK ES FR GB GR IE IT LI LU MC NL PT SE**
Designated Extension States:
**SI**

(30) Priority: **27.04.1993 GB 9308665**

(43) Date of publication of application:
**06.03.1996 Bulletin 1996/10**

(73) Proprietor: **Personal Biometric Encoders Limited London SW15 3NT (GB)**

(72) Inventor: **ROSS, William Leslie London SW15 3NT (GB)**

(74) Representative:
**Valentine, Francis Anthony Brinsley et al**
**REDDIE & GROSE**
**16 Theobalds Road**
**London WC1X 8PL (GB)**

(56) References cited:
EP-A- 0 459 808          WO-A-86/06527
GB-A- 2 217 497          GB-A- 2 243 235
US-A- 4 577 345          US-A- 5 180 901

## Description

This invention relates to fingerprint sensors.

US-A-4,577,395 discloses an electrical method and apparatus for sensing the pattern of epidermal ridges and valleys on an individual's finger to provide binary electrical signals representative of the sensed pattern. The binary output signals can be used to compare a sensed fingerprint with known fingerprint patterns.

US-A-5,180,901 discloses an IC card having a pressure sensor capable of sensing the joints of a digit placed on the sensor. The relative disposition of the joints may be used as an identifying characteristic of the owner of the card.

The invention provides identification and verification systems and methods as defined in the independent claims 1, 2, 15 and 16. Advantageous features of embodiments of the invention are defined in the dependent claims.

The present invention allows the use of the relative positions of finger epidermal sweat pores as an identifier. This is an identifier which is considerably harder to forge than those of the prior art.

Embodiments of the present invention will now be described, by way of example, and with reference to the accompanying drawings, in which:

Figure 1 illustrates a credit or bank card verification system incorporating the present invention;

Figures 2a and 2b illustrate side and top views respectively of an alternative credit, identity or bank card verification system incorporating the present invention;

Figure 3 is a view of the top surface of the card of Figure 1 or Figure 2;

Figure 4 is a view of the card with a portion of the card surface removed;

Figure 5 is a section of part of the card showing electronic components supported on the card, with the card unflexed;

Figure 6 is a view similar to Figure 5, with the card flexed;

Figure 7 is a plan view of a sensor mounted on the card of Figure 3;

Figure 8 is a plan view of an alternative sensor construction;

Figure 9 is a perspective view of the sensor of Figure 8;

Figures 10a and 10b are views in partial section along line VII-VII of Figure 7 with the membrane undeformed and deformed respectively;

Figures 11a to 11g are plan views of some of the layers of an alternative sensing cell construction formed by a number of different layers;

Figures 12a to 12c are three dimensional views of some of the layers of the sensor of Figures 11a to 11g;

Figures 13 and 13b are a schematic illustration of the operation of the sensing cell of Figures 11 and 12;

Figure 14 is a cross-sectional view of an alternative construction of the upper layers of a sensing cell having a vibratable sensing element;

Figure 15 is an enlarged view of a detail of Figure 14;

Figures 16a and 16b are a schematic illustration of the operation of the sensing cell of Figure 14;

Figure 17 is a cross-sectional view of a further alternative sensor construction;

Figures 18a to 18c are illustrations of three further alternative sensing elements for the sensor having a vibratable sensing element;

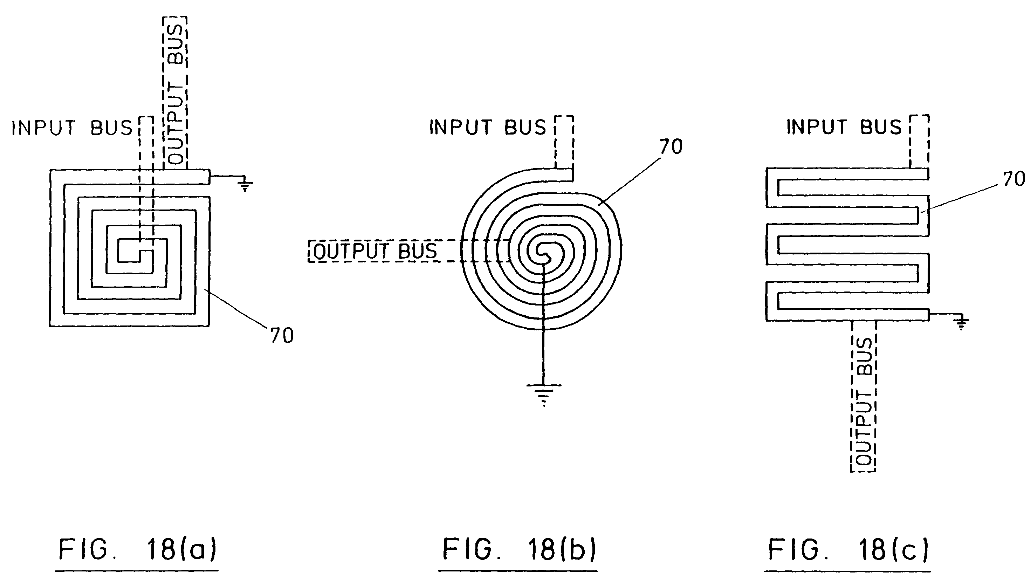

Figure 18 is an illustration of the vibratable sensing element;

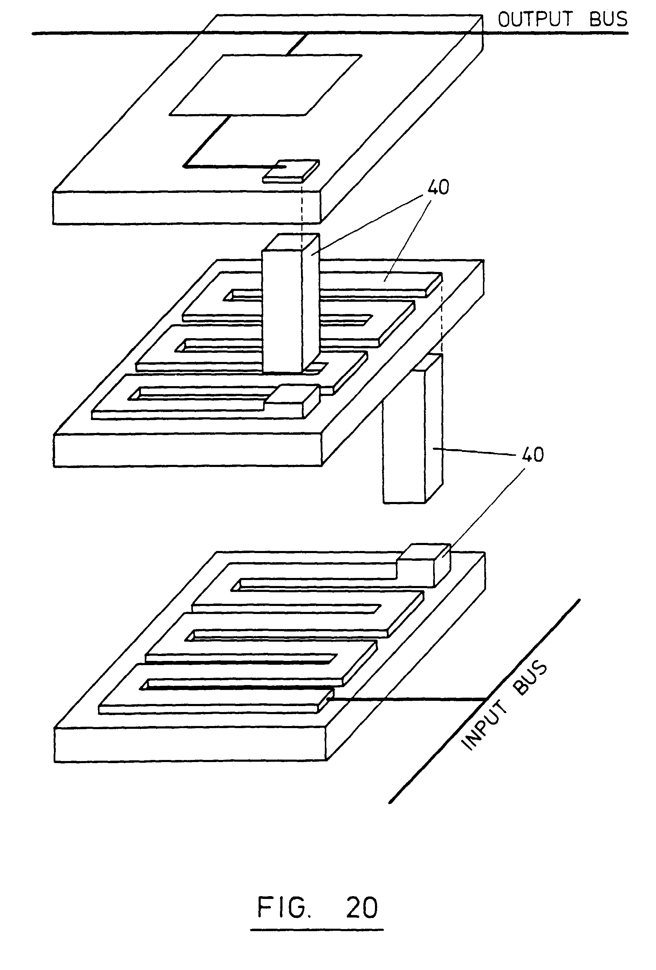

Figure 20 is a schematic illustration a detail of the fingerprint sensor;

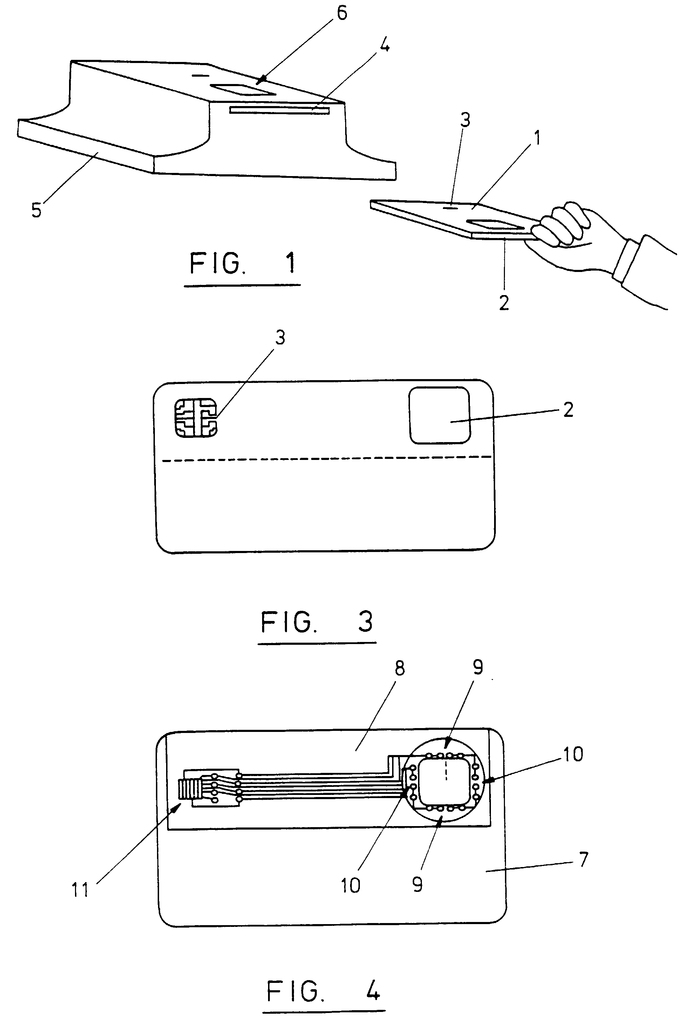

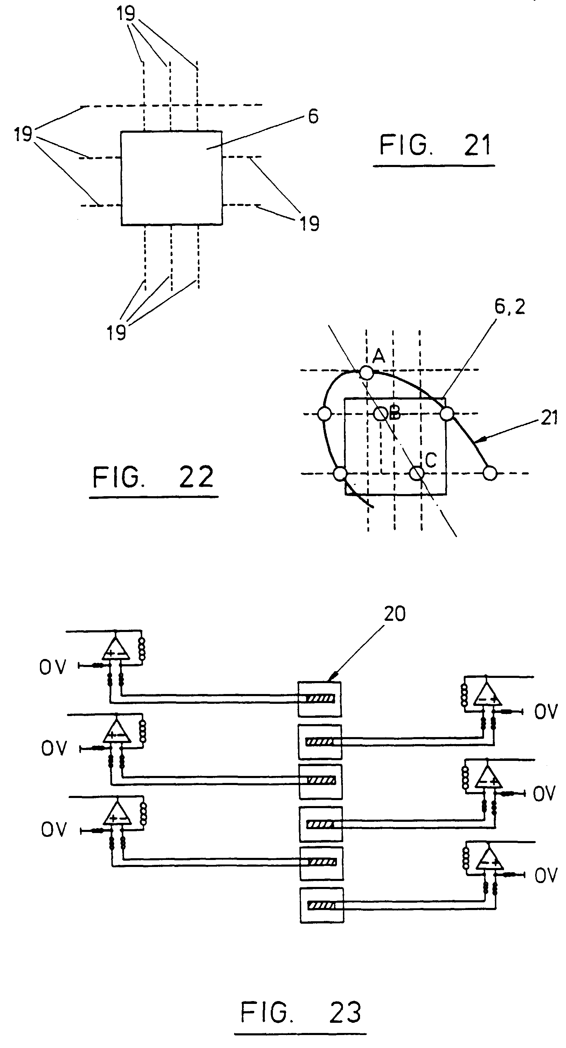

Figure 21 illustrates a window in the card receiver of Figure 1;

Figure 22 illustrates the window shown in Figure 21 with a finger positioned thereon;

Figure 23 illustrates a portion of a thermocouple array of Figures 21 and 22, on an enlarged scale;

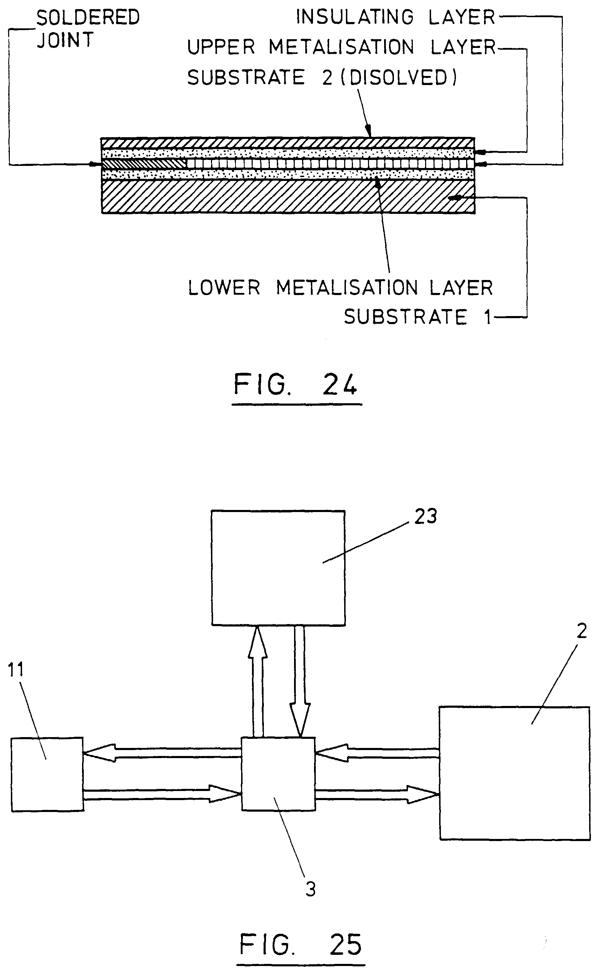

Figure 24 is a section through one thermocouple on a further enlarged scale;

Figure 25 is a diagram illustrating flows of data between the card and card receiver;

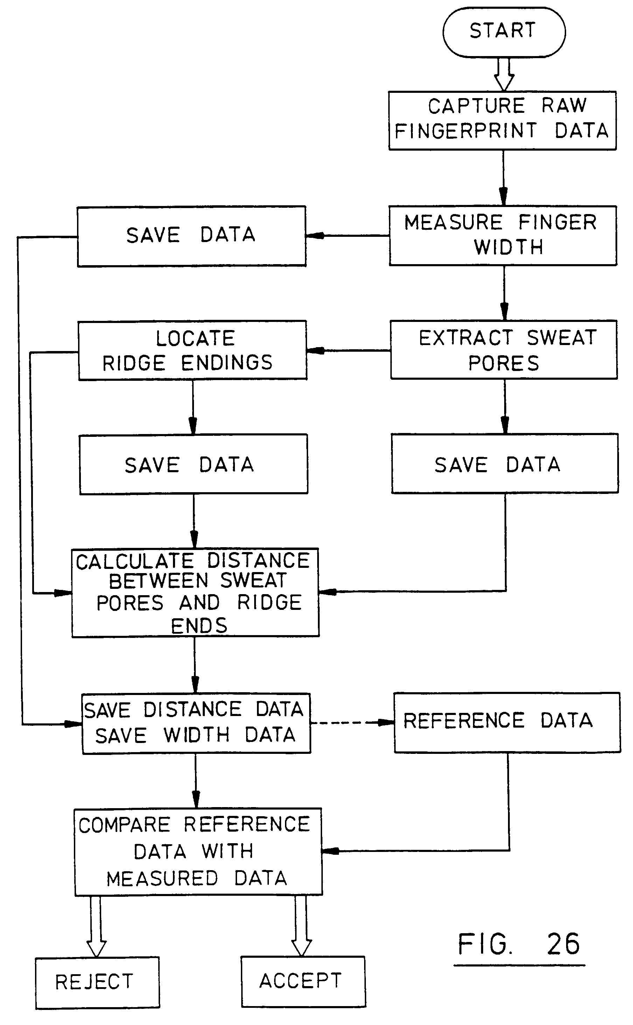

Figure 26 is a flow chart illustrating a verification method;

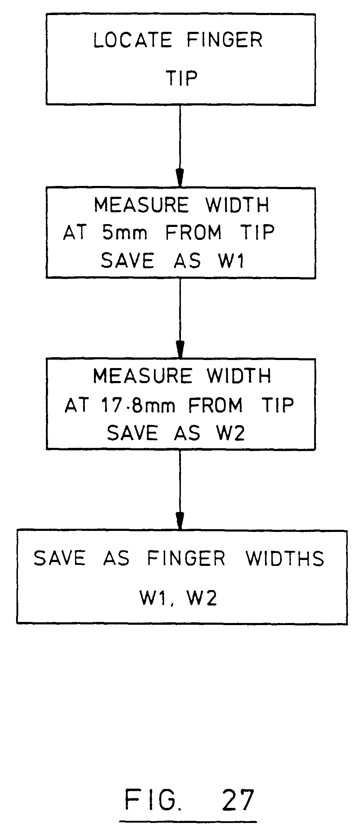

Figure 27 is a flow chart illustrating a method of characterising the dimensions of a finger;

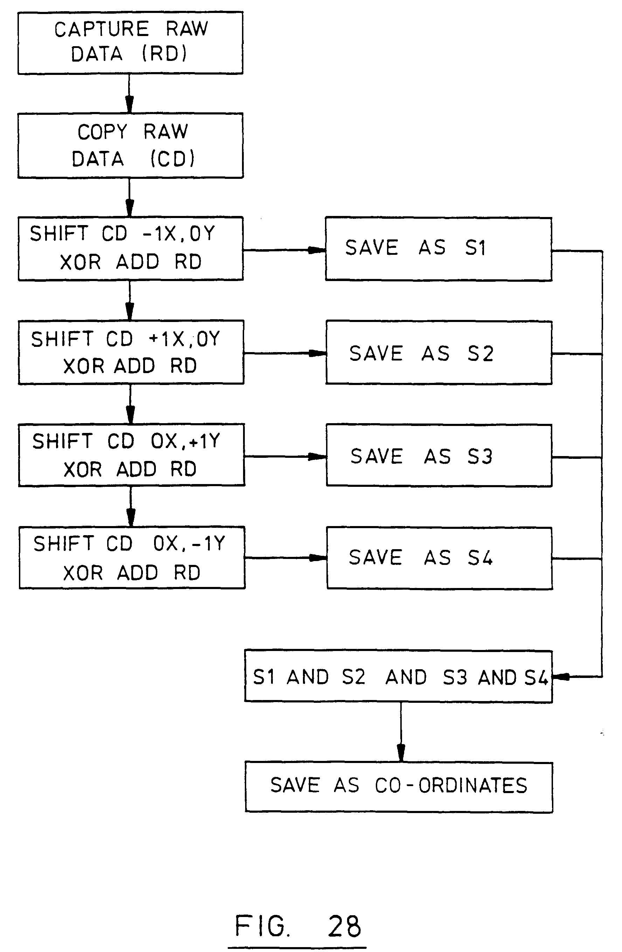

Figure 28 is a flow chart illustrating a method of determining the location of epidermal ridge sweat pores in a fingerprint pattern;

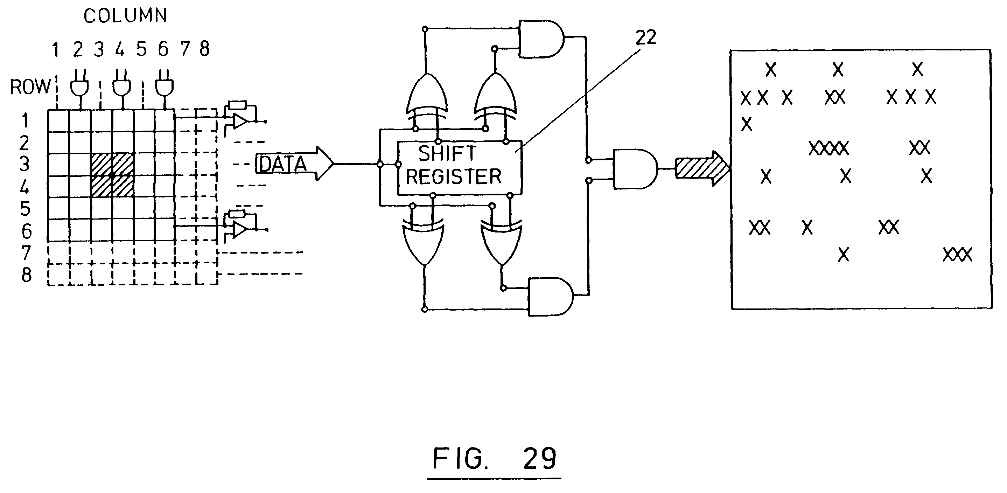

Figure 29 illustrates a method of determining the location of fingertip sweat pores;

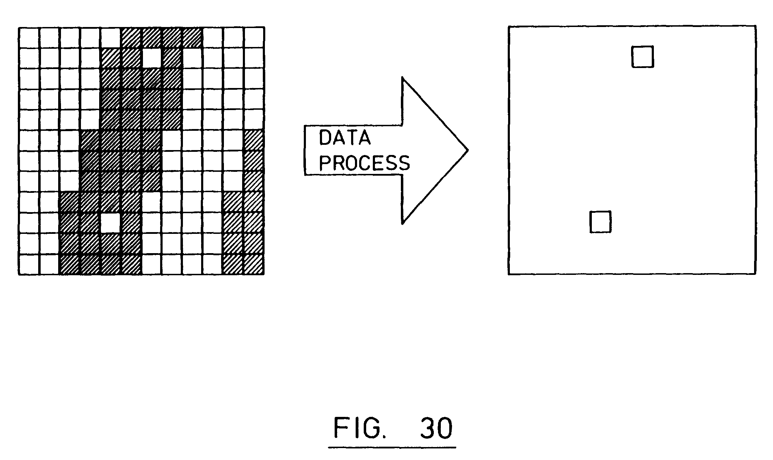

Figure 30 is a graphical representation of the input to and output from the sweat pore location method;

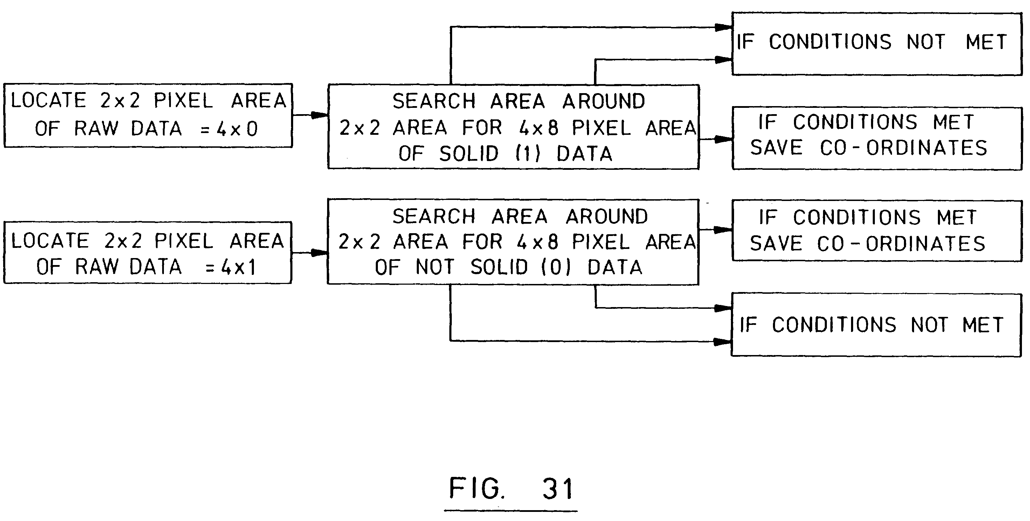

Figure 31 is a flow chart illustrating a method of determining the location of ridge minutiae;

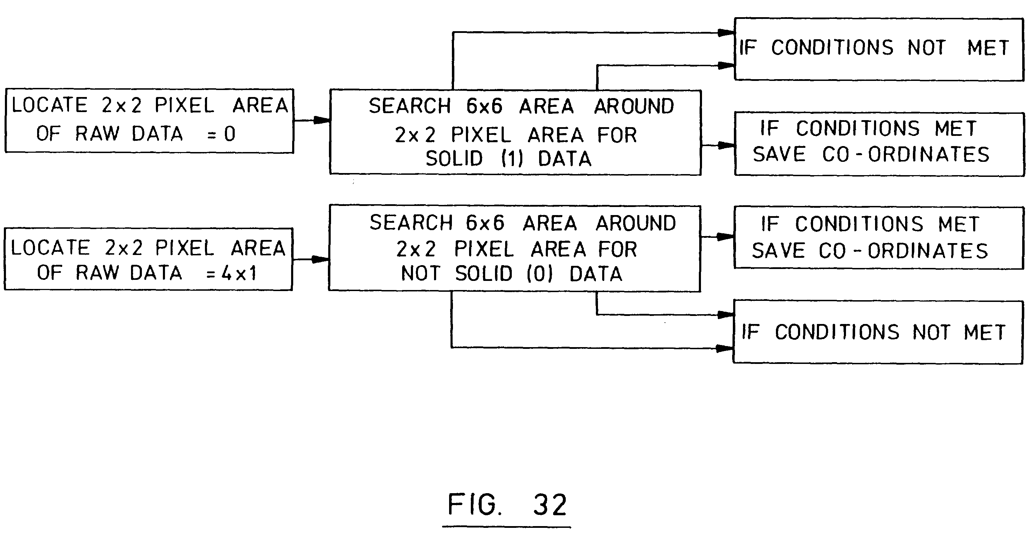

Figure 32 is a flow chart illustrating an alternative method of determining the location of ridge minutiae;

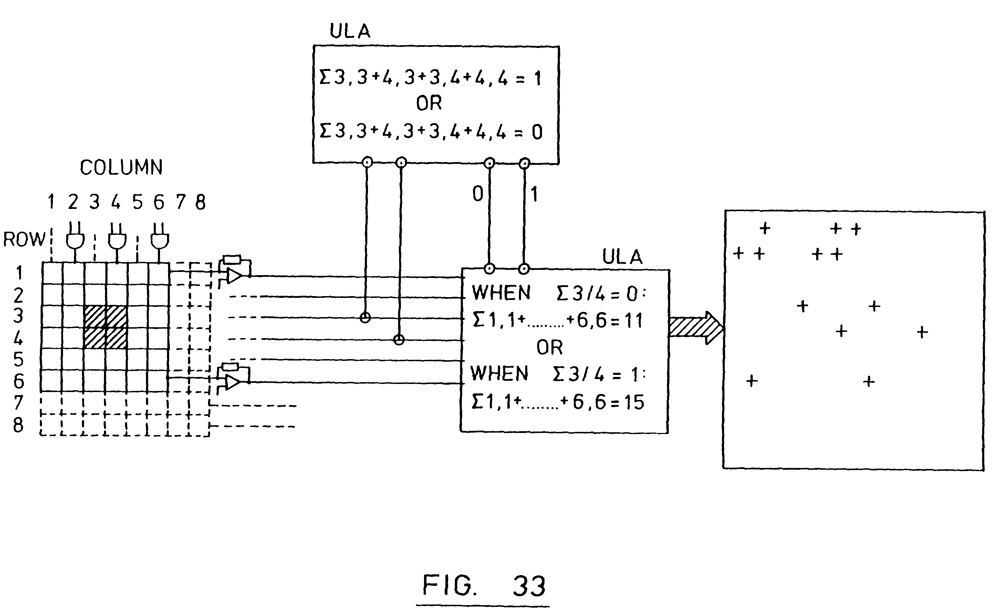

Figure 33 illustrates a method of determining the location of fingerprint minutiae (fingerprint minutiae are those points in the pattern where epidermal ridges either end or form bifurcations);

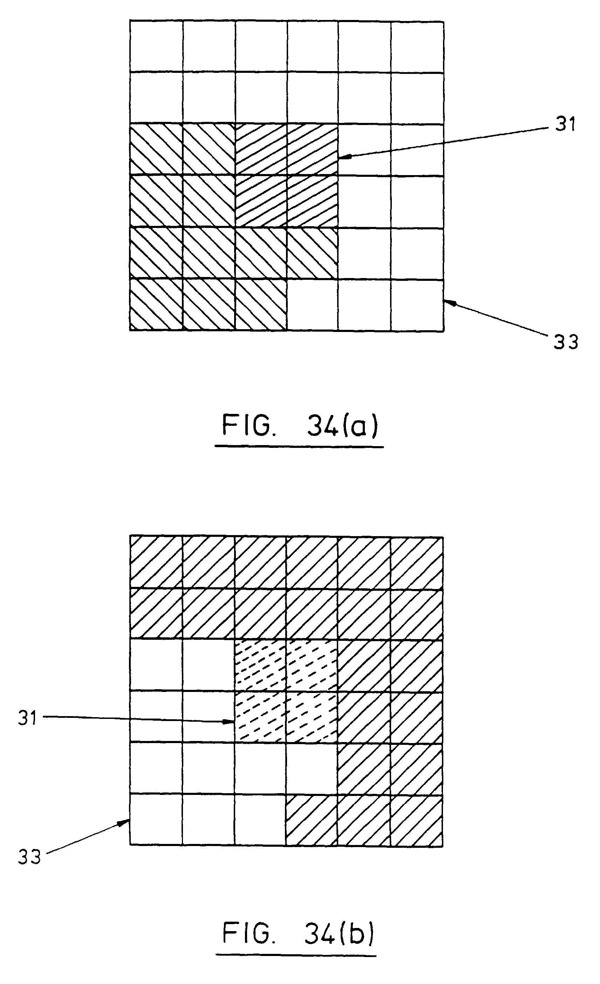

Figures 34a to 34b illustrate a portion of the sensor activated by fingerprint ridge endings or bifurcations respectively;

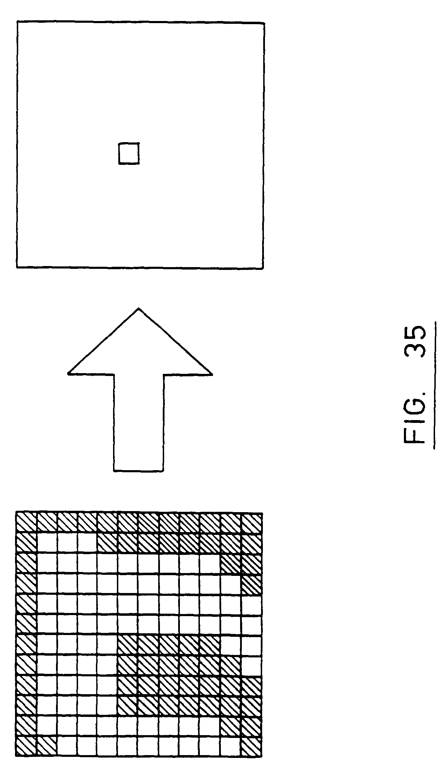

Figure 35 is a graphical representation of the input to and output from the minutiae location method; and

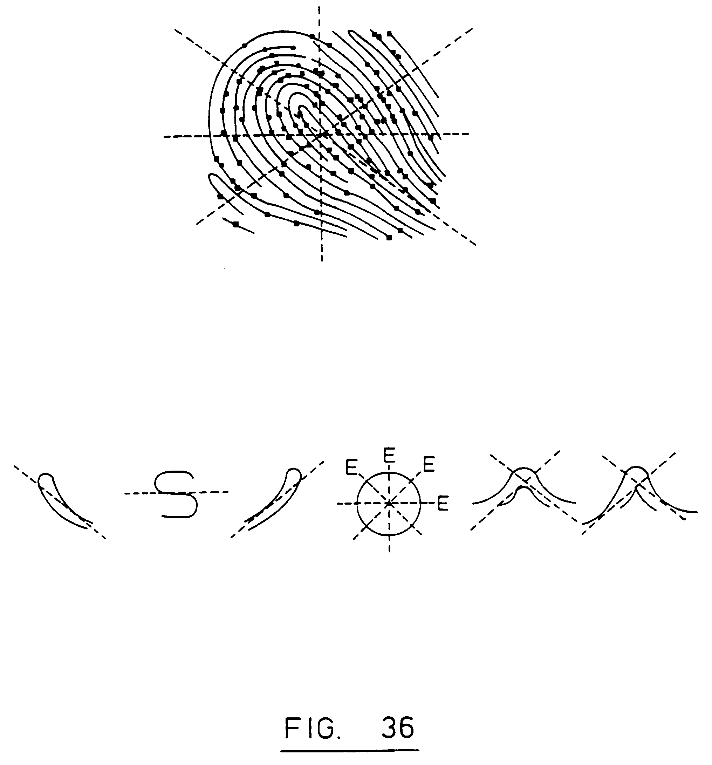

Figure 36 is an illustration of a system of classifying features of a fingerprint pattern;

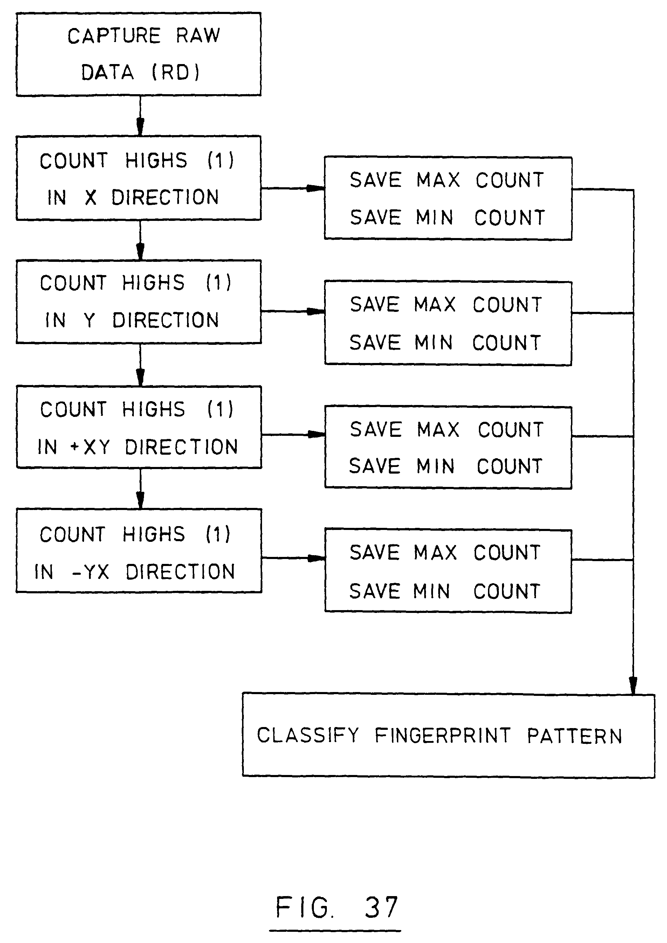

Figure 37 is a flowchart illustrating a method of classifying a sensed fingerprint pattern; and

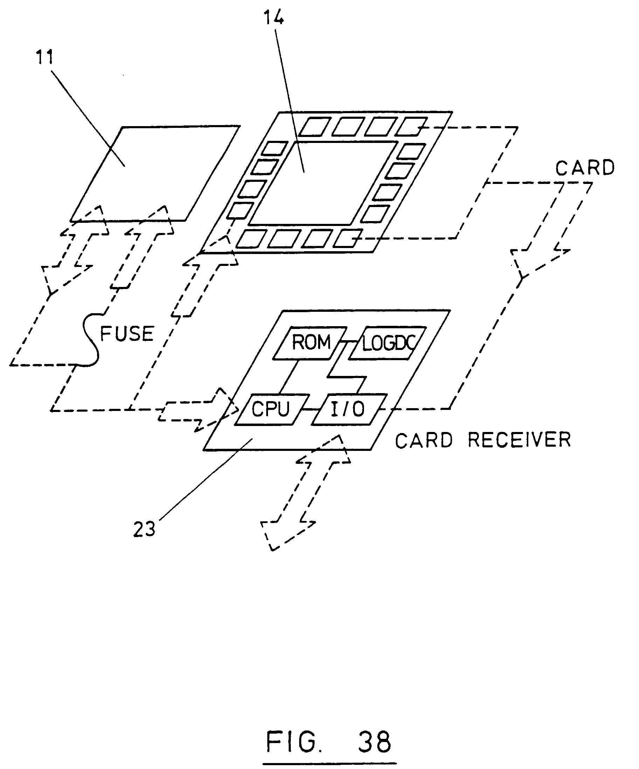

Figure 38 is a block diagram illustrating the flow of data in the credit or bank card verification system.

Fingerprint sensors for determining a fingerprint pattern will now be described, by way of example, with reference to Figures 1 to 24.

Referring to Figure 1, a credit card 1 with a sensor 2 and electrical contacts 3 is removably inserted in a slot 4 in a card receiver 5. The card receiver 5 has a window 6 through which a portion of a finger may be pressed on the sensor 2 of a card located in the receiver.

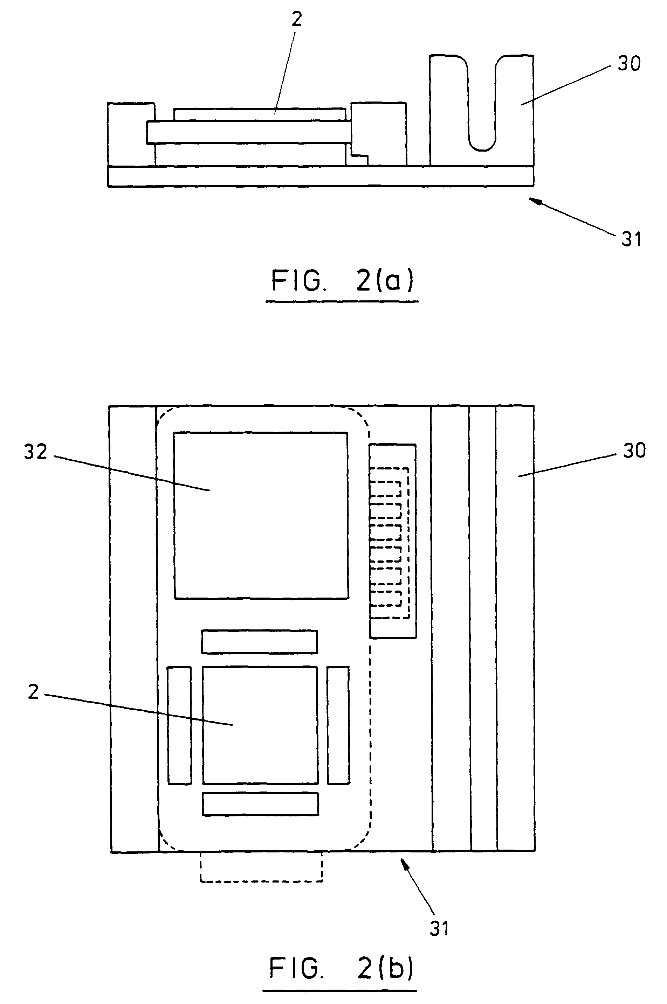

Figure 2 shows an alternative form of verification system.

A credit card having a magnetic strip is swiped through the swipe reader 30 and details of the proprietor or authorised user of the card read from the magnetic strip. The card receiver 31 has a built-in sensor 2 and a microprocessor 32. The microprocessor may be a Neural Instruction Set Processor.

A plastics carrier 7 has a thin layer 8 of nickel (approximately 0.05mm thick) electroformed onto its surface. The nickel layer is anodised and then coated with a thin uniform layer of polyimide.

The sensor 2 and its associated electric circuit, including sensor inputs (or drivers) 9, sensor outputs (or latches) 10, a card microprocessor 11 and electrical contacts 3 are mounted on the inert nickel supporting layer 8. The sensor circuit 2, 3, 9, 10, 11 and plastic carrier 7 are encapsulated within a plastic card envelope 12 to conform to ISO standards.

The high modulus of elasticity (Young's Modulus) of the nickel support 8 relative to the plastic card elements 7, 12 results in a card neutral axis of bending which lies within and through the nickel support 8. The sensor electronics 3, 9, 10, 11 are therefore close to the neutral axis at bending strain when the card is flexed.

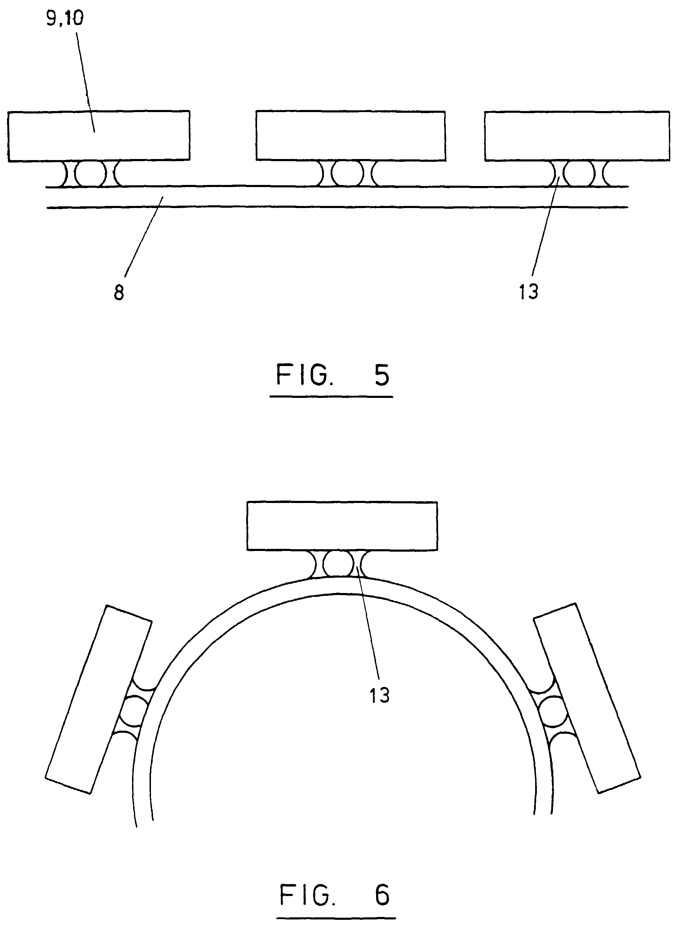

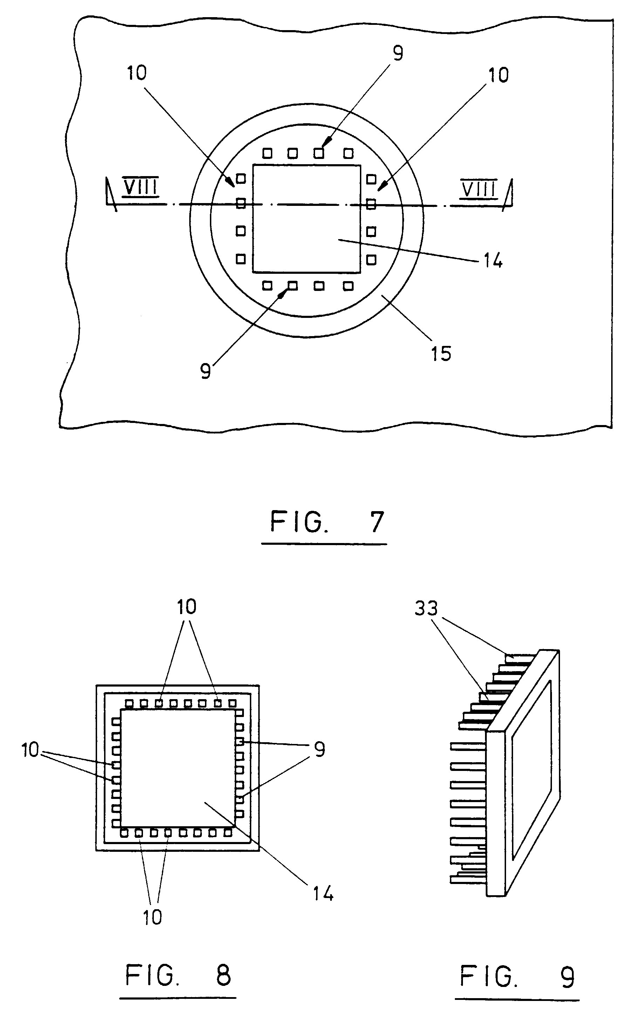

With reference to Figures 4 and 7, the sensor 2 is driven by eight discrete input gate arrays 9 and its output connected to eight discrete output gate arrays 10. Each gate array is approximately 1mm square and is connected to a portion of the sensor.

The gate arrays are arranged around the perimeter of the square sensor 2 in alternating groups of four input arrays 9 and four output arrays 10.

Figure 8 shows an alternative configuration where the sensor 2 is driven by sixteen input gate arrays 9 and its output connected to sixteen output gate arrays 10. The number of input and output gate arrays depends on the size of the sensor array, its density of sensing cells and the capacity of the gate arrays. The gate arrays 9, 10 of the sensor of Figure 8 are arranged in alternating groups of eight input gate arrays and eight output gate arrays.

The sensor 2 may be adapted to engage with a standard pin grid array package (see Figure 9). The sensor 2 is provided with pins 33 which form the electrical contacts for flow of power and data between the sensor and the circuitry connected to a package.

Each gate array is connected to the card electrical circuit using 0.13 mm square soft solder pillars (or pads) 13 (see Figure 5). The solder connections 13 are arranged near the centre of each gate array so that when the card 1 is flexed the solder pillars 13, having a low modulus of elasticity compared to the silicon gate arrays 9, 10, accommodate the curvature and absorb any strain.

The sensor 2 includes a square matrix 14, (12.55 mm x 12.55 mm) of pressure sensitive cells (approximately 100 μm square)mounted on an undeformable support.

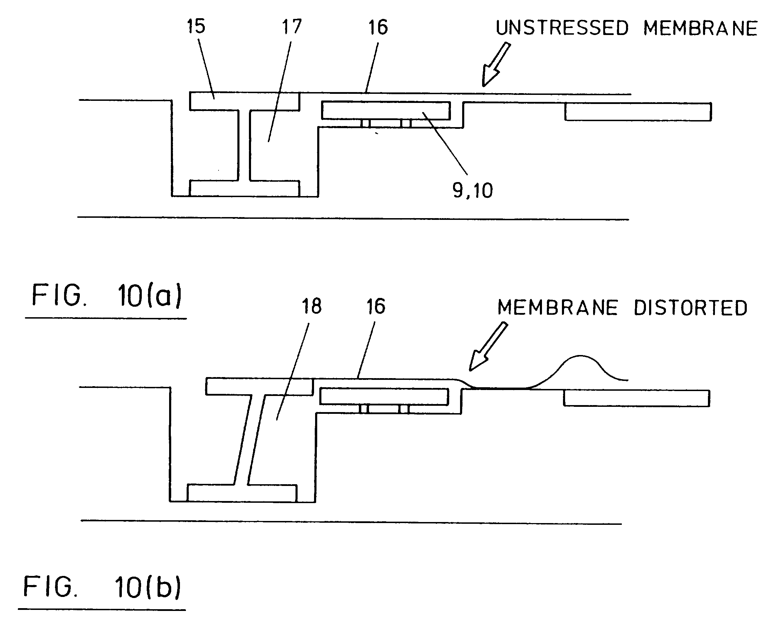

Referring to Figures 7, 10a and 10b, the cells of a first type of sensor array (or matrix) construction are defined by the cross-over points of a number of electrical conductors arranged in rows and columns. This construction of the matrix 14 of pressure sensitive cells is described in detail in EP-A-459808.

The sensor matrix 14 and gate arrays 9,10 are deposited on the nickel layer in a series of steps suitable for a flow line production process. The gate arrays 9,10 are first deposited at pre-determined locations on the inert nickel support layer. The rows and columns of electrical conductor defining the sensor matrix are then deposited in separate operations and are deposited so as to directly connect with the output gate arrays and input gate arrays respectively.

A thin MYLAR (trade mark) membrane 16 (5 to 20 μm, preferably 5 to 10 mm thick) having an array of metallic contact bridges deposited on its lower surface is supported approximately 20 μm above the conductor rows and columns.

Current is supplied via the input gate arrays 9 to the matrix columns and a resistive connection between a row and a column occurs when a membrane contact bridge is brought into contact with a cross-over point. The input and output currents in the columns and rows can be measured as described in EP-A-459808 to provide signals representative of the state of each cross-over point. These signals are latched into shift registers.

A circular elastic member 15 is located in a circular groove which extends around the sensor 2 and gate arrays 9, 10 (see Figure 7).

The membrane 16 is fixed to the elastic member 15 and is subjected to a residual tension. The membrane 16 and elastic member 15 define a sealed space 17 which is filled with a controlled volume of an incompressible silicone liquid 18.

When a finger is pressed against the Mylar membrane 16, the pre-selected volume of silicone liquid forces the membrane to conform to the shape of the fingerprint pattern. Those parts of the membrane 16 which conform to fingerprint ridges will be brought into contact with the sensor matrix. The membrane contact bridges will connect the matrix rows and columns at those positions within the matrix corresponding to fingerprint ridges and a matrix of electrical signals representing the fingerprint pattern is produced.

The volume of the silicone liquid is selected so as to ensure that when a finger tip is pressed down on the Mylar membrane 16, those portions of the membrane 16 in contact with an epidermal ridge are brought into contact with the conductor rows and columns and those portions of the membrane 16 corresponding to epidermal valleys are deformed by the incompressible fluid so as to extend into the epidermal valleys.

The volume of the silicone liquid should therefore be selected so as to be equal or less than the volume of the valleys. If the liquid volume is greater than the volume of the valleys the membrane contact bridges will not be brought into contact with the cross over points. The volume of the silicone liquid should also be large enough to ensure that these portions of the membrane 16 corresponding to valleys are sufficiently deformed into the valleys so as to be clearly distinguished from those portions of the membrane 16 corresponding to ridges.

The silicone fluid 18 improves the conformability of the Mylar membrane 16 and hence the sensor's accuracy. The fluid also smoothens out the ridge contours and eliminates minute ridge variations.

Fingerprint ridges and valleys are each approximately 400 μm wide, and finger sweat pores are approximately 100 μm wide. The output produced by the matrix (the matrix consisting of 100 μm square cells) is therefore capable of resolving fingerprint ridges and those sweat pores located in a fingerprint ridge (see Figures 30 and 33).

The elastic member 15 deforms elastically (see Figures 10a and 10b) when the membrane 16 is distorted and no longer in its equilibrium position. The deformation of the elastic member 15 results in an increased membrane tension and therefore acts to restore the membrane 16 to its equilibrium position.

The elastic member 15 therefore reduces the likelihood of a fold occurring in the membrane 16 which may then be trapped by a finger and generate false or misleading data.

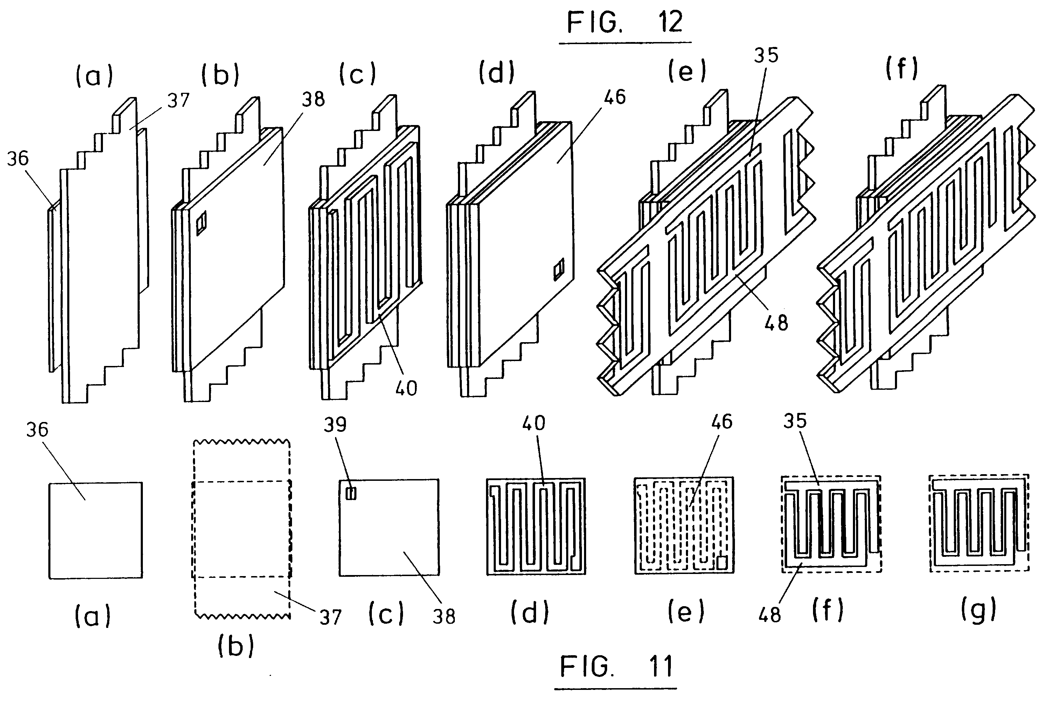

Referring to Figures 11 to 19, in an alternative type of sensor construction the cells 34 are defined by a matrix of vibratable piezo-electric sensing elements 35. The vibration of the sensing element 35 induces stresses therein and therefore generates an electric field. Contact of a vibrating sensing element 35 by an epidermal ridge of a fingerprint pattern will dampen the vibrations and thereby alter the electric field generated within the piezo-electric material by the stresses associated with its vibration.

A substantially non-deformable insulating substrate 36 (see Figure 11a) which may be of plastics, glass, silicon or other suitable insulant is masked and coated by, say, plating or vacuum deposition with a metal to form a number of parallel column electrodes 37 94μm wide and spaced 6μm apart (see Figures 11b and 12a). The spacing between the centre of adjacent columns 37 determines the width of the sensor cells. The cell density may be altered by changing the width and/or separation of the column electrodes 37.

A first layer 38 of an insulant such as polyimide (see Figures 10c and 11b) is deposited on stop of the column electrodes. First vias 39 are provided through the first insulating layer 38 to each of the column electrodes 37.

A second deposition of metal (not shown in Figures 10 or 11) is carried out to provide parallel row electrodes (not shown in Figures 11 or 12) separated from the column electrodes by the first insulating layer and displaced from the first via in the first insulating layer. The row electrodes are orthogonal to the column electrodes and are spaced at 100μm intervals. This is essentially the same procedure as for the column electrode and is not shown in Figures 11 or 12.

A second insulating layer is then deposited on the row electrodes (not shown). First and second vias are provided therein to allow access through the insulating layer to the column and row electrodes respectively.

A thin film resistor 40 of Nichrome or a similar stable material of low temperature coefficient is deposited on the second insulating layer with one end connected through the first vias to the column electrode (see Figures 11d and 12c). The thin film resistor 40 may, in an alternative configuration, be deposited below the column electrodes and connected by appropriate vias. The thin film resistor is deposited in a meander configuration so as to maximise its resistance whilst keeping it small enough to fit within the sensor cell. The resistance of the thin film resistor can be further increased by making successive layers of the resistor separated by insulant (see Figure 19).

A further insulating layer 46 is deposited on the Nichrome resistor. First 39 and second vias (not shown) are provided to allow access to the resistor (and hence to the column electrode) and row electrode respectively.

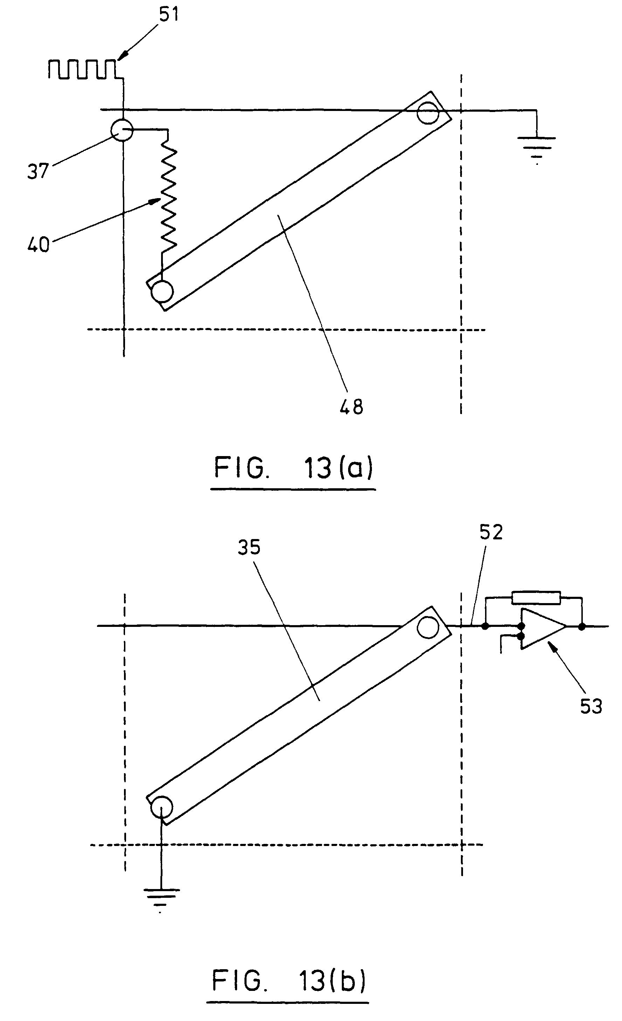

Two separate but interdigitated elements 35, 48 of a piezo-electric material such as polyvinylidene fluoride (PVDF) are then deposited on the further insulating layer 46 (see Figures 11f and 12e). One of the piezo-electric elements 48 (the driving element) has a first end connected through the first vias with the resistor and column electrode and its second end connected to earth (or ground) (see Figure 13a). The second piezo-electric element 35 (the serving element) has a first end converted through the second vias with the row electrode and its second end connected to earth (or ground) (see Figure 13b). The piezo-electric elements 35, 48 of each cell are separated from those of adjacent cells.

A layer of a metal 49 such as chromium is then deposited on the interdigitated piezo-electric elements 35, 48. The chromium layers on the first (i.e. driving) and second (i.e. sensing) elements of each cell are separated from those of adjacent cells. In an alternative construction, the metal layers on the driving elements in each row may be connected so as to form a single continuous layer along the row.

The chromium layer 49 acts as a support for the PVDF and to filter any infra red by conducting heat applied to the sensor by the fingertip throughout the surface of the sensor. The chromium layer on the sensing element may also be used as a contact for an alternative construction of row electrode (bus) which can be directly connected to the chromium layer. The column electrodes 37 of the sensor are each connected to an alternating voltage supply which can apply a pulse 51 of alternating voltage to the first driving piezo-electric element (see Figure 13a). The pulse of alternating voltage causes the driving piezo-electric element 48 to vibrate (see Figure 13a). The voltage supply is a square wave pulse and its amplitude is within the range of TTL voltage. The column electrodes are essentially an input bus to the sensor array. The vibrating of the driving element causes the second, sensing element 35 to vibrate in sympathy. This vibration of the sensing element induces stresses therein and thereby produces an electric field in the sensing element which produces a voltage at the row electrodes 52 (see Figure 13b). These voltage outputs from the row electrodes of the sensor array form the output bus of the sensor array system and are monitored by a sensing circuit 53.

Contact of the sensing element 35 by an epidermal ridge of a fingerprint pattern will dampen its vibrations and result in a change in the electric field produced in the sensing element by its piezo-electric properties. This results in different output signals between those cells actuated by contact with an epidermal ridge and those not so actuated.

The input and/or output circuits may be equipped with means for selecting a particular cell and determining its state.

These changes in output are monitored and the relative positions of actuated and non-actuated sensor cells determined.

The output may be represented by a matrix having positions corresponding to each of the cells of the sensor array and wherein actuated cells are indicated by a "1" (i.e. high) and non-actuated by a "0" (i.e. low).

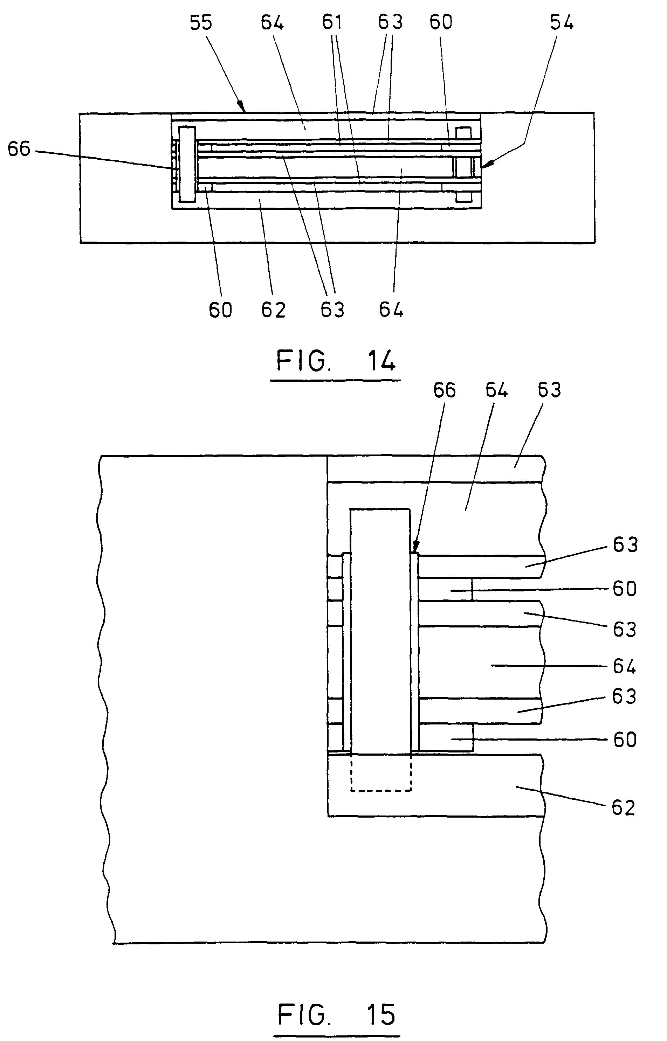

Referring to Figure 14, an alternative configuration of the driving 54 and sensing 55 elements has them one above the other rather than interdigitated together in the same horizontal place. The sensing element 55 is supported above the driving element 54 by insulating spacers 60 defining a void 61.

Column and row electrodes separated from each other by insulating layers (not shown) are deposited on a substrate in a similar manner to that described above.

A further insulating layer is deposited on the row electrode. A third, scanning electrode 71 is then deposited on this further insulating layer before being itself then covered by a deposition of another insulating layer. This is not shown in Figure 14 or described in detail as it is well known in the art. The scanning electrode is connected to an addressing circuit 69 for addressing each cell or group of cells in turn in scanning array.

A thin film resistor 62 of, say, Nichrom is then deposited on the insulating layer in a similar manner to that described above. This resistor layer 62 may itself be covered (not shown) by an insulating layer or left uncovered.

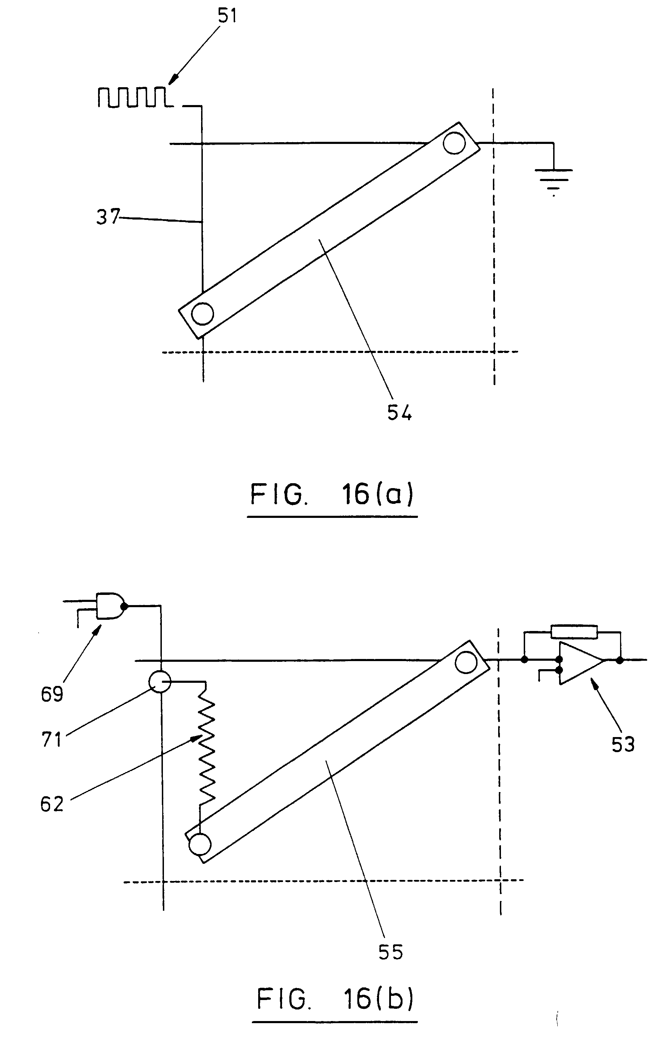

Insulating spacers 60 are then deposited around the edge of the thin film resistor 62. A sacrificial layer of a material which may be dissolved or otherwise removed from the finished sensor is then also deposited on the thin film resistor. The later removal of the sacrificial layer will produce a void 61 in the layered structure. Successive layers of metal 63 (e.g. chromium), PVDF 64 and metal 63 are then deposited to form a laminated piezo-electric driving element 54. One end of the driving element is connected to the column electrode and the other end connected to earth (see Figure 16a) in a manner similar to that described above. Vias 65 having an insulating lining 66 are provided therethrough.

Further insulating spacers 60 and a second sacrificial layer are then deposited in a similar manner to that described above. Successive layers of metal 63, PVDF 64 and metal 63 are then deposited to form a laminated piezo-electric sensing element 55. The sensing element has one end connected through the via in the driving element to the thin film resistor 62 which is in turn connected to scanning electrode 71 and the other end connected to the row electrode through a via 67 in the driving element (shown in dotted outline in Figure 14) and through vias in the thin film resistor and insulating layers in a manner similar to that described above. The row electrode forms the input into a sensing circuit 53. The sacrificial layers are then removed from the cell to create voids 61 or spaces between the two piezo-electric elements 54, 55 and between the driving element 54 and the thin film resistor 62.

The dimensions of the driving and sensing piezo-electric elements are selected so as to have a resonant frequency equal to that of the alternating voltage supply.

The column electrodes 68 of the sensor are all connected to an alternating voltage supply which can apply a pulse 51 of a square wave alternating voltage to the driving element 54 causing it to vibrate at its resonant frequency. The vibrating of the driving element causes the sensing element 55 to vibrate in sympathy and results in a change in the electric field produced within the sensing element.

Contact of the sensing element by an epidermal ridge of a fingerprint pattern will dampen its vibrations and result in a change in the electric field produced in the sensing element by its piezo-electric properties. This results in different output signals between those cells actuated by contact with an epidermal ridge and those not so actuated.

The state of each cell is determined by scanning the array from, say, top left to bottom right. The addressing circuit 68 applies an addressing signal to each sensing element in turn. This addressing signal produces an output indicative of the state of the scanned cell which is monitored by the sensing circuit 51.

The entire sensor cell array is scanned to produce an output matrix of signals representing the fingerprint pattern. This may be considered to be a matrix having positions corresponding to the location of each cell within the array wherein actuated cells are represented by a ("1") (i.e. high) signal and non-actuated cells by a ("0") (i.e. low) signal.

The dimensions of the driving and sensing piezo-electric elements of the invention are selected so as to have a resonant frequency equal to the frequency of the alternating voltage supply.

The Modulus of Elasticity of the piezo-electric elements is small compared to that of the polyimide and chromium layers;

$$E \text{ (polyimide)} = 4 \times 10^9 \text{ Pa}$$
$$E \text{ (PVDF)} = 2 \times 10^9 \text{ Pa}$$
$$E \text{ (chromium)} = \leq 200 \times 10^9 \text{ Pa}$$

The vibrating system therefore behaves as a metal beam resting on a uniform resilient support with a stiffness approaching that of the chromium layer, but more accurately;

Bending Stiffness (E1) is given by
$$EI = (E_{CR} I_{CR} + E_{PVDF} I_{PVDF}) \text{ Pa m}^4$$

and the natural or resonant frequency ($F_n$) of the combined PVDF and chromium layer is given by:

$$F_n = \frac{9.55 \times 3.52}{60} \sqrt{\frac{EI}{\mu \times \ell^4}} \quad H_z$$

where:

$\mu$ = mass/unit length of element
$\ell$ = effective length of electrode.

A sensing element having a PVDF layer 5µm thick, a chromium layer 2µm thick and an effective length of 80µm will therefore have a natural or resonant frequency of 707 kHz.

The applicant has appreciated that the effect of the applied external damping (i.e. response to contact by epidermal ridge) to the vibrating elements diminishes greatly with higher frequencies. Consequently, if the change in output and the response to epidermal ridge contact is to be optimised, the vibrating elements must be made to resonate at as low a frequency as possible.

The controlling factor is the effective electrode length as there are restraints on the thickness of the elements. The effective length may be increased by adopting an of piezo-electric layer (or layers) (see Figures 18a to 18c) 17c having a meander configuration.

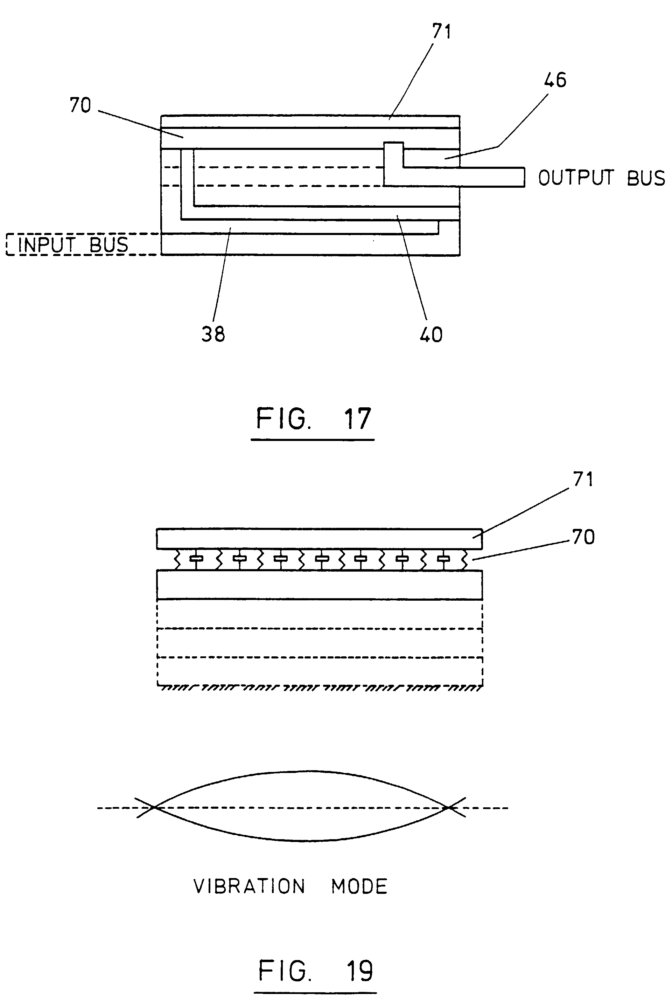

Figures 17, 18a and 19 show a further alternative construction of the sensor. Referring to Figures 17, 18a and 18c, there are no separate driving and sensing elements. A single piezo-electric element 70 (of, say, PVDF) having a metal layer 71 has a first end connected to the column electrode (i.e. input bus) through a thin film resistor, a second end connected to earth (or ground) and has a point on its length connected to the row electrode (i.e. output bus). Figure 17 does not show the connections to earth (or ground). The construction of the layers of the sensor is the same as described above.

A pulse of alternating voltage supplied to the element will cause it to vibrate at its natural or resonant frequency in the same manner as for the driving element of sensors of Figures 11, 12 and 14 described above.

This vibration will produce an output signal at the output bus which will change when the vibrations are dampened by contact with an epidermal ridge in a similar manner to that described above.

The piezo-electric element 70 has a meander configuration so as to increase its effective length and hence reduce its natural or resonant frequency of vibration.

The configurations of Figures 18a to 18c allow one to produce a vibratable element having an effective length of approximately 600μm yet small enough to be contained within a 100μm square sensing cell. The natural or resonant frequency of the vibratable elements of Figures 18a to 18c is approximately 12.6 kHz. The meander configuration of the piezo-electric element may also be used with the sensor having upper and lower piezo-electric elements described above (Figure 14).

The card receiver (see Figure 21) has an array of thermocouples located around the receiver window 6 (see Figure 1) or the sensor (see Figure 2). The array comprises a plurality of thermocouples 20 arranged in eleven lines 19. Each thermocouple 20 produces an electrical signal in the presence of a finger. The electrical signals permit determination of the orientation and width of a finger 21 pressed over the receiver window 6.

The thermocouple array may be used both as a first low level security identification and to drive a display which prompts the user to either reposition his finger (if incorrectly positioned) or confirm that his finger is correctly positioned on the receiver window 6.

The card receiver 5 has a set of electrical contacts inside the slot 4, which make contact with the card contacts 3 of a card inserted in the slot 4 to permit the exchange of data and power between the card receiver and the card.

A credit or bank card transaction authorisation system incorporating the present invention operates as follows:

On receipt of a new card, a user inserts the card into a card receiver and presses a selected portion of a selected finger tip against the sensor through the receiver window (see Figure 1) or on the card receiver (see Figure 2). Distinguishing features of his finger shape and print are then stored in the card microprocessor (reference data). This procedure is equivalent to signing or choosing the PIN (Personal Identification Number) for a standard credit or bank card.

The user then inserts his card into a card receiver and presses the selected portion of his selected finger onto the sensor whenever he wishes to complete a credit card or banking transaction. The sensed finger data (i.e. measured data) is compared with the stored finger data and an authorisation signal given by the card receiver if the two sets of data match.

A method of determining and comparing distinguishing finer features will now be described, by way of example, with reference to Figures 25 to 38.

In this method, the sensor output data is analysed to determine the location and distribution of ridge minutiae and ridge sweat pores within the sensed fingerprint portion and the width of the finger at one or more predetermined points. The width measurements form a first identification parameter or characteristic feature of the user. The relative positions of the ridge minutiae and ridge sweat pores of the minutiae distribution and the sweat pore distribution respectively are then stored and form the distinguishing or identifying features of a particular fingerprint pattern (see Figure 26). These form a second identification parameter or characteristic feature of the user.

The sensor output data may be represented as an output matrix of electric signals wherein those sensor cells (conductor cross-over points or vibratable sensing elements) which have been actuated by the presence or absence of contact by an epidermal ridge of a fingerprint pattern are distinguished from those sensor cells which have not been so activated (e.g. actuated cells are represented by "1" or "high" and non-actuated cells by "0" or "low".

The dimensions of the finger are characterised by analysing the output signals from the thermocouple array to determine the outline of the finger (see Figure 27). The values of the width at two predetermined positions is used to characterise the finger outline. There are the width at 5mm below the finger tip and at 17.8mm below the finger tip.

The location of epidermal ridge sweat pores is determined by analysing the sensor output data to locate those non-actuated portions of the sensor matrix which are the same size as a ridge sweat pore and which are surrounded by actuated sensor cells (see Figures 28, 29 and 30).

The output matrix is shifted minus one sensor cell position and minus two sensor cell positions (one cell position is the distance between adjacent sensor cells ie. 100μm and is approximately equal to the size of an epidermal sweat pore) parallel to the matrix row direction to produce first and second shifted matrices respectively, and parallel to the matrix column direction to produce third and fourth shifted matrices respectively.

The first shifted matrix and the output matrix are inputted into a first EXCLUSIVE-OR operator to produce a first EXCLUSIVE-OR operator output matrix (an EXCLUSIVE-OR operation is one in which only the differences between two sets of data are stored). The first shifted matrix and the second shifted matrix are inputted into a second EXCLUSIVE-OR operator to produce a second EXCLUSIVE-OR operator output signal.

The third shifted matrix is inputted into third and fourth EXCLUSIVE-OR operators with the output matrix and fourth shifted matrix respectively to produce third and fourth EXCLUSIVE-OR operator output matrices respectively.

The four EXCLUSIVE-OR operator output matrices are grouped into two pairs and each pair inputted into first and second AND operators respectively (an AND operation is one in which only the equalities between two sets of data are stored).

The two resulting AND operator output matrices are inputted into a third AND operator. The resulting third AND operator output matrix corresponds to the ridge sweat pore distribution of sensed fingerprint pattern. This may be described as a sweat pore location matrix.

The shifting and EXCLUSIVE-OR procedure described above is equivalent to shifting the sensor output matrix plus one and minus one sensor cell position in the two orthogonal directions defined by the sensor matrix rows and columns and then inputting each of the shifted matrices into a separate EXCLUSIVE-OR operator together with the sensor output matrix. The sweat pore distribution can therefore also be determined by shifting the sensor output matrix plus one and minus one cell position in the two orthogonal directions.

The ridge minutiae locations and distribution are determined by analysing the sensor output data to locate those points in the sensed fingerprint pattern where a ridge (ie line of activated sensor cells) or valley (ie line of sensor cells not activated) is discontinued.

The presence or otherwise of a ridge minutiae at a particular position is determined by considering the status of sensor cells contained within an analysis portion of the sensor matrix (see Figures 31 to 35). An alternative method of determining the location of ridge minutiae is described in GB-A-2243235.

After the ridge sweat pore locations have been determined the sweat pore matrix is added to the sensor output matrix. This is equivalent to filling in the non-actuated portions of the sensor output matrix and eliminates any errors that might arise by wrongly identifying sweat pores as minutiae.

Figures 31 and 32 illustrate two possible methods of determining whether an analysis portion of the sensor cell contains a ridge minutiae.

Figures 34a and 34b illustrate a ridge ending and a valley ending respectively within an analysis portion 33 of the sensor matrix. The portion 33 is defined by six rows and six columns (ie thirty-six cells). The position of a cell within the matrix portion 33 will be defined by x and y (cartesian) co-ordinates where the origin is defined by the bottom left-hand corner of the matrix portion 33.

Referring to Figure 32, the output data stream from the six rows under consideration is analysed to determine whether the cells in the central portion 31 at positions (3,3), (3,4), (4,3) and (4,4,) have either all been activated or all not been activated.

The output data stream is also analysed to determine the total number of activated cells in the thirty-six cell matrix portion 33.

If all four cells in the central portion 31 have been activated and the total number of activated cells in the six by six cell area 33 is fifteen then the central portion 31 corresponds to a ridge ending (see Figure 34a).

Alternatively, if all four cells in the central portion 31 have not been activated and the total number of activated cells in portion 33 is twenty-one then the central portion 31 corresponds to a valley ending (see Figure 34b).

The analysis is then repeated for all the six by six matrix portions contained within the sensor matrix and the distribution of ridge minutiae within the sensed fingerprint pattern determined. This may be represented as a minutiae matrix of a form similar to the sweat pore matrix. The dimensions of both the sweat pore matrix and the minutiae matrix will be the same as that of the sensor output matrix.

This is achieved (see Figure 32) by analysing the sensor output matrix to determine all those first portions (or pixel areas) of the matrix two sensor cell positions square which have either all been actuated ("1") or all not been actuated ("0"). Then the area of the matrix surrounding any such first portions (or pixel areas) and contained within a second matrix portion six sensor cell positions square centred on the first portions is analysed to determine the number of cells therein which have been actuated ("1").

Referring to the alternative method of Figure 31, first the sensor output matrix is analysed to determine those first portions of the matrix two sensor cells square which have either all been actuated ("1") or all not been actuated ("0"). Then the area of the matrix surrounding each of these first portions is analysed to determine whether there is a rectangle of cells which have either all been actuated ("1") or all not been actuated ("0") which is continuous with one side of the first portion.

A first portion having four actuated ("1") cells contiguous on one of its sides with a rectangle of thirty two actuated ("1") cells and having its other sides surrounded by non actuated ("0") cells will indicate a ridge edging.

A first portion having four non-actuated ("0") cells contiguous on one of its sides with a rectangle of thirty-two non-actuated ("0") cells and having its other sides surrounded by actuated ("1") cells indicates a ridge bifurcation (i.e. ridge valley ending).

The sweat pore and minutiae matrices are then analysed to produce a data stream characteristic of the fingerprint pattern.

There are a large number of ridge sweat pores and ridge minutiae on a finger tip. It will not usually be necessary to use the entire sweat pore distribution and ridge minutiae distribution to produce a data stream characteristic of a particular individual. For example, at present the Home Office consider the relative locations of five distinguishing features to be sufficient to accurately identify an individual. The size of the distributions can be reduced by considering only a selected portion or window of the sweat pore and minutiae matrices. The position of this selected portion can, for example, be defined with reference to the finger tip outline so as to ensure that the system always compares the same portion of the finger print pattern.

The sweat pore matrix is scanned row by row from top to bottom and from left to right as one would read a page of text i.e. top left to bottom right. When a sweat pore is located, the minutiae matrix is scanned in the same manner and the distances between the sweat pore and any located minutiae stored as a first number sequence in the order in which the respective minutiae are located on the minutiae matrix. The process is repeated for each sweat pore in the sweat pore matrix and the number sequences corresponding to each sweat pore location stored as a second number sequence in the order in which the respective sweat pores were located in the sweat pore matrix. The second number sequence is a sum of the first number sequences. This second sequence is used to characterise the fingerprint pattern.

A fingerprint feature may be classified into one of seven different classifications (e.g. plain arch, radial loop, and plain whorl) according to a fingerprint classification system developed by E.R.Henry (see BYTE, October 1993, "PCs Catch Criminals Using Fingerprint Analysis"). The classification of a fingerprint pattern may be determined by analysing the rows and columns of the sensor output matrix, and diagonals at 45° thereto to calculate the values of the maximum and minimum ratios of actuated ("1") cells to non actuated ("0") cells (see Figures 36 and 37). This is a well known procedure and the fingerprint classification may be used as a further identification parameter or characteristic feature of the authorised user of the card 1.

Referring to Figure 38, the distinguishing features (ie minutiae and sweat pore distributions) of the fingerprint pattern of a selected portion of a selected finger are stored in the on-card memory of the card microprocessor 11 as a characteristic number sequence. The finger widths and fingerprint classification are also stored in the on-card memory. When the card is inserted into a card receiver and a finger pressed onto the sensor matrix, the output data stream is latched before being communicated to a card receiver microprocessor 23 where it is processed to determine the finger widths, the fingerprint pattern, the ridge minutiae and ridge sweat pore distributions and hence to produce a characteristic number sequence (i.e. the identification parameters or user's characterising features).

The on-card memory communicates the stored identification parameters or characteristic features to the card receiver microprocessor where they are compared with the sensed identification parameters (user's characteristic). The card receiver microprocessor 23 then authorises the credit card or banking transaction if the stored and sensed sequences match, provided that there is no contrary instruction from a remote central database (eg bank customer is overdrawn). The matching of the sequences corresponds to matching stored and sensed fingerprint patterns.

The sensed and stored characteristic number sequences are compared by scanning the two sequences and determining what proportion of the two sequences are the same. This is done by looking for identical sequences in both the sensed and stored characteristic sequences. If more than a predetermined proportion of the two sequences are the same, the card receiver microprocessor authorises the transaction.

The apparatus and method described above allow one to rapidly and accurately record and/or compare distinguishing features of a fingerprint pattern.

In an alternative form of sensor, the cells are each formed by a thermocouple.

In an alternative form of card receiver, the thermocouple array may be replaced by an array of piezo-electric pressure sensors of the sort well known in the art of pressure sensors.

The card microprocessor may be replaced by a magnetic strip onto which fingerprint data translated into code has been written.

The relative capacities of the card memory, card receiver memory and remote central database may be altered, as may the relative power of the card microprocessor, card receiver microprocessor and remote central processor. For instance, the output data analysis described above may be carried out by the card microprocessor rather than the card receiver microprocessor.

The minutiae determination method described may be amended for sensor cells and/or analysis portions 33 of a different size by redefining the method parameters.

A sensor larger than the width of a fingerprint obviates the need for the thermocouple array whose function is then carried out by the outer sensor cells of the sensor array.

## Claims

1.  An identification system comprising a fingerprint sensor (2), the fingerprint sensor comprising an array (14, 35) of individually actuable sensing cells (34), the cells each being actuated by the presence or absence of contact of the respective cell (34) by the epidermal ridges of the fingerprint pattern of a finger positioned on the sensor (2), each actuated sensing cell contributing to a sensor output signal indicative of the relative positions of the actuated sensing cells, the identification system further comprising sensor output processing means (10, 11, 32, 53), the sensor output processing means having means for receiving the sensor output signal and processing the sensor output signal to produce a processed signal indicative of the relative positions of distinguishing features of the sensed fingerprint pattern, the identification system further comprising memory means (11, 32)for storing the processed signal and being characterised in that the array of sensing cells is sufficiently fine to sense sweat pores located in epidermal ridges, the fingerprint pattern distinguishing features include sweat pores in the epidermal ridges, and the processing means comprises means for determining the relative positions of those non-actuated portions of the sensor array which are the same size as epidermal sweat pores and are surrounded by actuated sensor cells.

2.  A verification system comprising a fingerprint sensor (2), the fingerprint sensor comprising an array (14, 35) of individually actuable sensing cells (34), the sensing cells each being actuated by the presence or absence of contact of the respective cell (34) by the epidermal ridge of the fingerprint pattern of a finger positioned on the sensor, each actuated sensing cell contributing to a sensor output signal indicative of the relative positions of the actuated sensing cells, the verification system further comprising sensor output processing means (10, 11, 32, 53), the sensor output processing means having means for receiving the sensor output signal and processing the sensor output signal to produce a processed signal indicative of the relative positions of distinguishing features of the sensed fingerprint pattern, the verification system further comprising comparison means for comparing the processed signal with a set of allowable signals stored in the system memory means, and authorisation means for producing an authorisation signal when the processed signal matches an allowable signal and being characterised in that the array of sensing cells is sufficiently fine to sense sweat pores located in epidermal ridges, the fingerprint pattern distinguishing features include sweat pores in the epidermal ridges, and the processing means comprises means for determining the relative positions of those non-actuated portions of the sensor array which are the same size as epidermal sweat pores and are surrounded by actuated sensor cells.

3. A system according to claim 1 or claim 2 wherein the array of sensing cells comprises cells whose length and breadth are each substantially equal to or less than 100 μm.

4. A system according to any preceding claim wherein the locations of sweat pores are determined by comparing the signals from each cell (34) or group of cells in the array (14, 35) with the signals from each adjacent cell or group of cells.

5. A system according to claim 4 wherein the width of a ridge sweat pore is substantially equal to a predetermined integer multiple of the distance between the centre of adjacent sensing cells (34) of the array and the processing means comprises; memory means (10) for storing the sensor output signal, sensor output signal shifting means (22) into which the sensor output signal is supplied, the shifting means shifting the sensor output signal minus the predetermined integer multiple number of sensing cell positions and plus one predetermined integer multiple number of sensing cell positions in two orthogonal directions to produce four shifted signals, first and second shifted signals being the sensor output signal shifted minus the predetermined integer multiple number of sensing cell positions and plus one predetermined integer multiple number of sensing cell positions respectively in a first direction, third and fourth shifted signals being the sensor output signal shifted minus one predetermined integer multiple number of sensing cell positions and plus one predetermined integer multiple number of sensing cell positions respectively in a second direction orthogonal to the first direction, four EXCLUSIVE-OR operators, the sensor output signal being inputted into first and second EXCLUSIVE-OR operators together with the first and second shifted signals respectively to produce first and second EXCLUSIVE-OR operator output signals, the sensor output signal being inputted into third and fourth EXCLUSIVE-OR operators together with the third and fourth shifted signals respectively to produce third and fourth EXCLUSIVE-OR operator output signals, three AND operators, two of the EXCLUSIVE-OR operator output signals being inputted into a first AND operator and the other two EXCLUSIVE-OR operator output signals being inputted into a second AND operator, the output signals from the first and second AND operators being inputted into a third AND operator to produce a processing means output signal indicative of those epidermal sweat pores located in epidermal ridges.

6. A system according to claim 4 wherein the width of a ridge sweat pore is substantially equal to a predetermined integer multiple of the distance between the centre of adjacent sensing cells (34) of the array and the processing means comprises; latching means (10) for latching the sensor output signal, sensor output signal shifting means (22) into which the sensor output signal is latched, the shifting means shifting the sensor output signal minus the predetermined integer multiple number of sensing cell positions and minus two times the predetermined integer multiple number of sensing cell positions in two orthogonal directions to produce four shifted signals, first and second shifted signals being the sensor output signal shifted minus the predetermined integer multiple number of sensing cell positions and minus two times the predetermined integer multiple number of sensing cell positions respectively in a first direction, third and fourth shifted signals being the sensor output signal shifted minus one predetermined integer multiple number of sensing cell positions and minus two times the predetermined integer multiple number of sensing cell positions respectively in a second direction orthogonal to the first direction, four EXCLUSIVE-OR operators, the first shifted signal being inputted into first and second EXCLUSIVE-OR operators together with the sensor output signal and second shifted signal respectively to produce first and second EXCLUSIVE-OR operator output signals, the third shifted signal being inputted into third and fourth EXCLUSIVE-OR operators together with the sensor output signal and fourth shifted signal respectively to produce third and fourth EXCLUSIVE-OR operator output signals, three AND operators, two of the EXCLUSIVE-OR operator output signals being inputted into a first AND operator and the other two EXCLUSIVE-OR operator output signals being inputted into a second AND operator, the output signals from the first and second AND operators being inputted into a third AND operator to produce a processing means output signal indicative of those epidermal sweat pores located in epidermal ridges.

7. A system according to claim 5 or claim 6 wherein the distance between the centre of adjacent sensing cells (34) is substantially equal to the width of a ridge sweat pore.

8. A system according to claim 5 or claim 6 wherein the sensing cells are arranged in a plurality of parallel rows and a plurality of parallel columns (37, 68) orthogonal to the sensing cell rows, and the sensor output signal is shifted parallel to the directions of the sensing cell rows and sensing cell columns.

9. A system according to any of claims 1 to 8 wherein the fingerprint pattern distinguishing features include epidermal ridge minutiae and the processing means (10, 11, 32, 53) comprises; monitoring means for monitoring whether a first portion (31) of the sensor array has been actuated, the breadth of the first sensor portion being equal to or less than the width of an epidermal ridge, the monitoring means producing a monitoring means output signal indicative of the status of the individually actuable sensing cells within the first sensor portion (33), addition means for determining the total number of actuated sensing cells within a second portion of the sensor array, the breadth of the second sensor portion being equal to or less than the distance separating the centre-lines of adjacent epidermal ridges and having the first sensor portion at its centre, the addition means producing an addition means output signal indicative of the number of actuated sensing cells within the second sensor portion,

    second memory means for storing sets of monitoring means output signals and addition means output signals, each set indicative of a monitoring means output signal and an addition means output signal which when produced at the same time by the first and second portions of a sensor array having a finger positioned thereon correspond to a ridge minutiae located at the first sensor portion,
second comparison means for comparing the monitoring means output signal and addition means output signal to the sets of signals stored in the second memory means, the second comparison means producing a second comparison means output signal indicative of the presence of a ridge minutiae at the first sensor portion when the monitoring means output signal and addition means output signal match one of the sets of signals stored in the memory means.

10. A system according to claim 9 wherein the centres of adjacent individually actuable sensing cells (34) are substantially 100 µm apart, the first sensor portion (31) comprises four sensing cells forming a square substantially 200 µm in breadth, the second sensor portion (33) comprises thirty-six sensing cells forming a square substantially 600 µm in breadth, a first set and a second set of signals are stored in the second memory means, the first set of signals comprising a first signal representing a first sensor portion having four actuated cells and a second signal representing a second sensor portion having fifteen actuated cells, the second set of signals comprising a third signal representing a first sensor portion having no actuated cells and a fourth signal representing a second sensor portion having twenty-one actuated cells.

11. A system according to claims 3 and 9 wherein the processing means (11, 32, 53) includes calculating means for calculation of the distances between epidermal ridge sweat pores and epidermal ridge minutiae.

12. A system according to any of the preceding claims wherein the sensor output processing means (11, 32, 53) includes means for calculating in a predetermined order the distances from each of a first set of distinguishing features of the sensed fingerprint pattern to each of a second set of distinguishing features of the sensed fingerprint pattern to produce an ordered sequence of the calculated distances.

13. A system according to claim 12 wherein the first set of distinguishing features comprises epidermal ridge sweat pores and the second set of distinguishing features comprises epidermal ridge minutiae.

14. A verification system according to claim 12 or claim 13 wherein the ordered sequence is compared to a stored ordered sequence, and an authorisation signal produced when more than a predetermined portion of the first ordered sequence matches the or a portion of the stored ordered sequence.

15. An identification method for use with a fingerprint sensor (2), the fingerprint sensor comprising an array (14, 35) of individually actuable sensing cells (34), the sensing cells each being actuated by the presence or absence of contact of the respective cell by the epidermal ridges of the fingerprint pattern of a finger positioned on the sensor, each actuated sensing cell contributing to a sensor output signal indicative of relative positions of the actuated sensing cells, the identification method comprising the steps of processing the sensor output signal to produce a processed signal indicative of the relative positions of distinguishing features of the sensed fingerprint pattern, and then storing the processed signal in a memory means, characterised in that the distinguishing features include sweat pores located in epidermal ridges.

16. A verification method for use with a fingerprint sensor (2), the fingerprint sensor comprising an array (14, 35) of individually actuable sensing cells (34), the sensing cells each being actuated by the presence or absence of contact of the respective cell by the epidermal ridge of the fingerprint pattern of a finger positioned on the sensor, each actuated sensing cell contributing to a sensor output signal indicative of the relative positions of the actuated sensing cells, the verification method comprising the steps of processing the sensor output signal to produce a processed signal indicative of the relative positions of distinguishing features of the sensed fingerprint pattern, comparing the processed signal with a set of allowable signals stored in a memory means, and producing an authorisation signal when the processed signal matches an allowable signal, characterised in that the distinguishing features include sweat pores located in epidermal ridges.

17. A method according to claim 15 or claim 16 wherein the processing means determines the relative positions of those non-actuated portions of the sensor array which are the same size as epidermal sweat pores and are surrounded by actuated sensing cells.

18. A method according to claim 17 wherein the locations of sweat pores are determined by comparing the signals from each cell (34) or group of cells in the array (14, 25) with the signals from each adjacent cell or group of cells.

19. A method according to any of claims 15 to 18 comprising storing the sensor output signal, shifting the stored sensor output signal minus one times the number of sensing cell positions substantially equal to the width of a sweat pore and plus one times the number of sensing cell positions substantially equal to the width of a sweat pore in two orthogonal directions to produce four shifted signals, first and second shifted signals being the sensor output signal shifted minus one times the number of sensing cell positions substantially equal to the width of a sweat pore and plus one times the number of sensing cell positions substantially equal to the width of a sweat pore respectively in a first direction, third and fourth shifted signals being the sensor output signal shifted minus one times the number of sensing cell positions substantially equal to the width of a sweat pore and plus one times the number of sensing cell positions substantially equal to the width of a sweat pore respectively in a second direction orthogonal to the first direction, inputting the sensor output signals into first and second EXCLUSIVE-OR operators together with the first and second shifted signal respectively to produce first and second EXCLUSIVE-OR operator output signals, inputting the sensor output signal into third and fourth EXCLUSIVE-OR operators together with the third and fourth shifted signals respectively to produce third and fourth EXCLUSIVE-OR operator output signals, inputting two of the EXCLUSIVE-OR operator output signals into a first AND operator to produce a first AND operator output signal, inputting the remaining two EXCLUSIVE-OR operator output signals into a second AND operator to produce a second AND operator output signal and then inputting the first and second AND operator output signals into a third AND operator to produce a signal indicative of those sweat pores located in epidermal ridges.

20. A method according to any of claims 15 to 18 comprising latching the sensor output signal, shifting the latched sensor output signal minus one times the number of sensing cell positions substantially equal to the width of a sweat pore and minus two times the number of sensing cell positions substantially equal to the width of a sweat pore in two orthogonal directions to produce four shifted signals, first and second shifted signals being the sensor output signal shifted minus one times the number of sensing cell positions substantially equal to the width of a sweat pore and minus two times the number of sensing cell positions substantially equal to the width of a sweat pore respectively in a first direction, third and fourth shifted signals being the sensor output signal shifted minus one times the number of sensing cell positions substantially equal to the width of a sweat pore and minus two times the number of sensing cell positions substantially equal to the width of a sweat pore respectively in a second direction orthogonal to the first direction, inputting the first shifted signal into first and second EXCLUSIVE-OR operators together with the sensor output signal and second shifted signal respectively to produce first and second EXCLUSIVE-OR operator output signals, inputting the third shifted signal into third and fourth EXCLUSIVE-OR operators together with the sensor output signal and fourth shifted signal respectively to produce third and fourth EXCLUSIVE-OR operator output signals, inputting two of the EXCLUSIVE-OR operator output signals into a first AND operator to produce a first AND operator output signal, inputting the remaining two EXCLUSIVE-OR operator output signals into a second AND operator to produce a second AND operator output signal and then inputting the first and second AND operator output signals into a third AND operator to produce a signal indicative of those sweat pores located in epidermal ridges.

21. A method according to claim 19 or claim 20 wherein the width of a sweat pore is substantially equal to the distance between the centre of adjacent sensing cells.

22. A method according to any of claims 15 to 21 wherein the distinguishing features include epidermal ridge minutiae.

23. A system according to any of claims 1 to 14 including a sensor comprising an array (14,35) of individually actuable sensing cells (34) and a resiliently deformable membrane (16) defining a sealed space (17) above the individually actuable sensing cells, wherein the sealed space is entirely filled with a preselected volume of a substantially incompressible fluid (18) such that on deformation of the membranae by application of a finger thereto the substantially incompressible fluid acts on the resiliently deformable membrane so as to at least partially fill the epidermal valleys of the applied finger, and wherein the individually actuable cells (34) are actuated by the deformation of the membrane (16) to produce output signals representative of those sensing cells which have been actuated.

24. A system according to claim 23, wherein the undeformed membrane (16) is 5 to 20 μm thick.

25. A system according to claim 24, wherein the undeformed membrane (16) is 5 to 10 μm thick.

26. A system according to any of claims 23 to 25 wherein the incompressible fluid (18) is a silicone liquid.

27. A system according to any of claims 23 to 26, wherein the membrane periphery is fixed to a resiliently deformable support (15).

28. A system according to any of claims 1 to 14 including a fingerprint sensor (2) comprising an array (14,35) of individually actuable sensing cells (34), wherein the cells each include a vibratable sensing element (35,55) responsive to the presence or absence of contact of the cell by a fingerprint epidermal ridge and driving means (48,59,51) for vibrating the sensing element (35,55), and the sensor further comprises detection means (10,11,32,53) responsive to the extent of vibration of each of the sensing elements (35,55) to produce output signals distinguishing those elements contacted by an epidermal ridge from those not so contacted.

29. A system according to claim 28 wherein the driving means comprises means for supplying a driving signal (51) to the sensing element (53) and the sensing element vibrates when the signal is supplied thereto.

30. A system according to any of claims 28 to 29 wherein the sensing element (35,55) is a beam or a resilient support.

31. A system according to any of claims 28 to 30 wherein the driving signal (51) is an alternating voltage and the sensing element (35,55) includes a piezoelectric material.

32. A system according to any of claims 28 to 30 wherein the driving signal is supplied by a vibrating driving element (48,54) located close to the sensing element causing it to vibrate in sympathy.

33. A system according to claim 32 wherein the driving element includes a piezo-electric material and the driving means includes means for applying an alternating voltage (51) to the driving element (48,54).

34. A system according to any of claims 28 to 33 wherein the sensing element (35,55) includes a piezo-electric material.

35. A system according to claim 29 wherein the driving signal (51) is an oscillating signal whose frequency is substantially equal to the resonant frequency of the vibratable sensing element (35,55).

36. A system according to claims 31 or 34 wherein the detection means comprises means responsive to the electric field in the sensing element (35,55)

37. A system according to claim 36 wherein a first input end of the sensing element (35,55) is connected to a source of alternating voltage, a second end of the sensing element is connected to earth, and the detection means is connected to the sensing element at a point between the first and second ends of the sensing element.

38. A system according to any of claims 28 to 37 wherein the cells (34) are arranged in a plurality of rows and columns and the driving means pulses each column in turn and the detection means reads each cell output row by row.

39. A system according to claims 32, 33 and 34 wherein the driving element has a first end connected to an alternating voltage supply and a second end connected to earth and the sensing element is connected to an output.

40. A system according to claim 39 wherein the driving and sensing elements are distinct, interdigitated fork-shaped elements.

41. A system according to claim 39 wherein the driving and sensing elements are distinct elements, the sensing element is located above the driving element and separated therefrom.

42. A system according to any of claims 28 to 41 wherein the sensing element includes a layer of a metal (49).

43. A system according to any of claims 32, 33 or 39 to 41 wherein the driving element includes a layer of a metal (49) .

44. A system according to any of claims 23 to 43, wherein the sensor is a fingerprint sensor (2) and forms part of an electric circuit (2,3,9,10,11) on a plastics card (12), and the card electric circuit further comprises a plurality of discrete sensor input components (9) for supplying power to the sensor, and sensor output components (10) for receiving the sensor output signals and electrical contacts (3) for supplying power to and communicating with the card circuit.

45. A system according to claim 44 wherein each said card circuit component (2,3,9,10,11) is located near the card neutral axis of bending.

46. A system according to claim 44 wherein the card circuit is supported on a support sheet (8) having a modulus of elasticity higher than that of the plastics carrier (7).

47. A system according to claim 44 wherein the ratio of the modulus of elasticity of the support sheet to the modulus of elasticity of the plastics carrier is in the range 100:1 to 10:3.

48. A system according to claim 46 wherein the support sheet is an anodised nickel layer (7) coated with a thin layer of polyimide.

49. A system according to any of claims 44 to 48 wherein each sensor input component or output component is supported near its centre by soft solder pads (13) which connect each component to the card circuit.

50. A system according to any of claims 44 to 49 and further comprising a card receiver(s), the card receiver having a slot (F) for receiving the card, electrical contacts in the slot for connecting with the card electrical contacts (3) of the card and sensor access means (6) allowing a portion of a finger to be positioned on the sensor (2) of a card located in the card receiver slot (4).

51. A system according to claim 50 wherein the sensor access means has an array of thermocouples (20) arranged around the perimeter of the access means (6).

52. A system according to claim 50 wherein either or both of the card or card receiver further comprise data processing means.

**Patentansprüche**

1. Ein Identifizierungssystem, das einen Fingerabdrucksensor (2) umfaßt, der eine Matrix (14, 35) individuell auslösbarer Abtastzellen (34) aufweist, von denen jede Zelle durch Kontaktaufnahme oder Kontaktmangel der betroffenen Zelle (34) mit den epidermalen Leisten des Fingerabdruckmusters eines auf den Sensor (2) gelegten Fingers betätigt wird und jede betätigte Abtastzelle zu einem Sensorausgangssignal beiträgt, das die relativen Positionen der betätigten Abtastzellen anzeigt, wobei das Identifizierungssystem ferner Sensorausgangsverarbeitungsmittel (10, 11, 32, 53) umfaßt, die Mittel zum Empfang des Sensorausgangssignals und zur Verarbeitung des Sensorausgangssignals haben, um ein verarbeitetes Signal zu erzeugen, das die relativen Positionen von Kennzeichen des abgetasteten Fingerabdruckmusters anzeigt, wobei das Identifizierungssystem weiterhin Speichermittel (11, 32) zur Speicherung des verarbeiteten Signals aufweist und dadurch gekennzeichnet ist, daß die Matrix von Abtastzellen ausreichend fein ist, um in den epidermalen Leisten befindliche Schweißporen abzutasten, die in den epidermalen Leisten zu den Kennzeichen des Fingerabdruckmusters gehören, und wobei das Verarbeitungsmittel Mittel zur Bestimmung der relativen Positionen jener nichtausgelösten Teile der Sensormatrix umfaßt, die die gleiche Größe wie epidermale Schweißporen haben und von ausgelösten Sensorzellen umgeben sind.

2. Ein Verifizierungssystem, das einen Fingerabdrucksensor (2) umfaßt, der eine Matrix (14, 35) individuell auslösbarer Abtastzellen (34) aufweist, von denen jede Zelle durch Kontaktaufnahme oder Kontaktmangel der betroffenen Zelle (34) mit der epidermalen Leiste des Fingerabdruckmusters eines auf den Sensor gelegten Fingers betätigt wird und jede betätigte Abtastzelle zu einem Sensorausgangssignal beiträgt, das die relativen Positionen der betätigten Abtastzellen anzeigt, wobei das Verifizierungssystem ferner Sensorausgangsverarbeitungsmittel (10, 11, 32, 53) umfaßt, die Mittel zum Empfang des Sensorausgangssignals und zur Verarbeitung des Sensorausgangssignals haben, um ein verarbeitetes Signal zu erzeugen, das die relativen Positionen von Kennzeichen des abgetasteten Fingerabdruckmusters anzeigt, wobei das Verifizierungssystem weiterhin Vergleichsmittel zum Vergleichen des verarbeiteten Signals mit einem Satz zulässiger Signale, die in dem Systemspeichermittel gespeichert sind, und Autorisierungsmittel zum Erzeugen eines Autorisierungssignals aufweist, wenn das verarbeitete Signal mit einem zulässigen Signal übereinstimmt, dadurch gekennzeichnet, daß die Matrix von Abtastzellen ausreichend fein ist, um in den epidermalen Leisten befindliche Schweißporen abzutasten, die in den epidermalen Leisten zu den Kennzeichen des Fingerabdruckmusters gehören, und wobei das Verarbeitungsmittel Mittel zur Bestimmung der relativen Positionen jener nichtausgelösten Teile der Sensormatrix umfaßt, die die gleiche Größe wie epidermale Schweißporen haben und von ausgelösten Sensorzellen umgeben sind.

3. Ein System nach Anspruch 1 oder Anspruch 2, bei dem die Matrix von Abtastzellen Zellen umfaßt, deren jeweilige Länge und Breite im wesentlichen gleich 100 µm oder kleiner sind.

4. Ein System nach einem vorstehenden Anspruch, bei dem die Stellen von Schweißporen bestimmt werden, indem die Signale von jeder Zelle (34) oder Gruppe von Zellen in der Matrix (14, 35) mit den Signalen von jeder benachbarten Zelle oder Gruppe von Zellen verglichen werden.

5. Ein System nach Anspruch 4, bei dem die Weite einer Leistenschweißpore im wesentlichen einem vorbestimmten ganzen Vielfachen des Abstands zwischen dem Mittelpunkt benachbarter Abtastzellen (34) der Matrix und dem Verarbeitungsmittel gleich ist; das umfaßt: Speichermittel (10) zur Speicherung des Sensorausgangssignals, Sensorausgangssignal-Verschiebungsmittel (22), dem das Sensorausgangssignal zugeführt wird, wobei das Verschiebungsmittel das Sensorausgangssignal minus der vorbestimmten, ganzen vielfachen Zahl von Abtastzellenpositionen und plus einer vorbestimmten, ganzen vielfachen Zahl von Abtastzellenpositionen in zwei orthogonale Richtungen verschiebt, um vier verschobene Signale zu erzeugen, wobei die ersten und zweiten verschobenen Signale das Sensorausgangssignal sind, das minus der vorbestimmten, ganzen vielfachen Zahl von Abtastzellenpositionen bzw. plus einer vorbestimmten, ganzen vielfachen Zahl von Abtastzellenpositionen in eine erste Richtung verschoben wurde, dritte und vierte verschobene Signale das Sensorausgangssignal sind, das minus einer vorbestimmten, ganzen vielfachen Zahl von Abtastzellenpositionen bzw. plus einer vorbestimmten, ganzen vielfachen Zahl von Abtastzellenpositionen in eine zweite Richtung orthogonal zur ersten Richtung verschoben wurde, mit vier EXKLUSIV-ODER-Operatoren, wobei das Sensorausgangssignal zusammen mit den ersten bzw. zweiten verschobenen Signalen in erste und zweite EXKLUSIV-ODER-Operatoren eingegeben wird, um erste und zweite EXKLUSIV-ODER-Operatorausgangssignale zu erzeugen, und das Sensorausgangssignal zusammen mit den dritten bzw. vierten verschobenen Signalen in dritte und vierte EXKLUSIV-ODER-Operatoren eingegeben wird, um dritte und vierte EXKLUSIV-ODER-Operatorausgangssignale zu erzeugen, mit drei UND-Operatoren, wobei zwei der EXKLUSIV-ODER-Operatorausgangssignale in einen ersten UND-Operator und die beiden anderen EXKLUSIV-ODER-Operatorausgangssignale in einen zweiten UND-Operator eingegeben werden, und die Ausgangssignale der ersten und zweiten UND-Operatoren in einen dritten UND-Operator eingegeben werden, um ein Verarbeitungsmittelausgangssignal zu erzeugen, durch welches jene epidermalen Schweißporen, die sich in den epidermalen Leisten befinden, angezeigt werden.

6. Ein System nach Anspruch 4, bei dem die Weite einer Leistenschweißpore im wesentlichen einem vorbestimmten, ganzen Vielfachen des Abstands zwischen dem Mittelpunkt benachbarter Abtastzellen (34) der Matrix und dem Verarbeitungsmittel gleich ist; das umfaßt: Haltemittel (10) zum Halten des Sensorausgangssignals, Sensorausgangssignal-Verschiebungsmittel (22), in dem das Sensorausgangssignal gehalten wird, wobei das Verschiebungsmittel das Sensorausgangssignal minus der vorbestimmten, ganzen vielfachen Zahl von Abtastzellenpositionen und minus zweimal der vorbestimmten, ganzen vielfachen Zahl von Abtastzellenpositionen in zwei orthogonale Richtungen verschiebt, um vier verschobene Signale zu erzeugen, wobei die ersten und zweiten verschobenen Signale das Sensorausgangssignal sind, das minus der vorbestimmten, ganzen vielfachen Zahl von Abtastzellenpositionen bzw. minus zweimal der vorbestimmten, ganzen vielfachen Zahl von Abtastzellenpositionen in eine erste Richtung verschoben wurde, die dritten und vierten verschobenen Signale das Sensorausgangssignal sind, das minus einer vorbestimmten, ganzen vielfachen Zahl von Abtastzellenpositionen bzw. minus zweimal der vorbestimmten, ganzen vielfachen Zahl von Abtastzellenpositionen in eine zweite Richtung orthogonal zur ersten Richtung verschoben wurde, mit vier EXKLUSIV-ODER-Operatoren, wobei das erste verschobene Signal zusammen mit dem Sensorausgangssignal bzw. zweiten verschobenen Signal in erste und zweite EXKLUSIV-ODER-Operatoren eingegeben wird, um erste und zweite EXKLUSIV-ODER-Operatorausgangssignale zu erzeugen, das dritte verschobene Signal zusammen mit dem Sensorausgangssignal bzw. vierten verschobenen Signal in dritte und vierte EXKLUSIV-ODER-Operatoren eingegeben wird, um dritte und vierte EXKLUSIV-ODER-Operatorausgangssignale zu erzeugen, drei UND-Operatoren, wobei zwei der EXKLUSIV-ODER-Operatorausgangssignale in einen ersten UND-Operator und die beiden anderen EXKLUSIV-ODER-Operatorausgangssignale in einen zweiten UND-Operator eingegeben werden, die Ausgangssignale der ersten und zweiten UND-Operatoren in einen dritten UND-Operator eingegeben werden, um ein Verarbeitungsmittelausgangssignal zu erzeugen, durch welches jene epidermalen Schweißporen, die sich in den epidermalen Leisten befinden, angezeigt werden.

7. Ein System nach Anspruch 5 oder Anspruch 6, bei dem der Abstand zwischen dem Mittelpunkt benachbarter Abtastzellen (34) der Weite einer Leistenschweißpore im wesentlichen gleich ist.

8. Ein System nach Anspruch 5 oder Anspruch 6, bei dem die Abtastzellen in einer Mehrzahl von parallelen Reihen und einer Mehrzahl von parallelen Spalten (37, 68) orthogonal zu den Abtastzellenreihen angeordnet sind und das Sensorausgangssignal parallel zu den Richtungen der Abtastzellenreihen und Abtastzellenspalten verschoben wird.

9. Ein System nach einem der vorstehenden Ansprüche 1 bis 8, bei dem die Fingerabdruckmusterkennzeichen kleine Details der epidermalen Leisten beinhalten und die Verarbeitungsmittel (10, 11, 32, 53) umfassen: Überwachungsmittel zur Überwachung, ob ein erster Teil (31) der Sensormatrix ausgelöst worden ist, wobei die Breite des ersten Sensorteils der Weite einer epidermalen Leiste gleich oder kleiner als diese ist, das Überwachungsmittel ein Überwachungsmittelausgangssignal erzeugt, das den Status der individuell auslösbaren Abtastzellen in dem ersten Sensorteil (33) anzeigt, Additionsmittel, um die Gesamtzahl ausgelöster Abtastzellen in einem zweiten Teil der Sensormatrix zu bestimmen, wobei die Breite des zweiten Sensorteils dem Abstand, um welchen die Mittellinien benachbarter epidermaler Leisten voneinander getrennt sind, gleich oder kleiner als dieser ist, wobei sich der erste Sensorteil im Mittelpunkt befindet und das Additionsmittel ein Additionsmittelausgangssignal erzeugt, das die Anzahl der ausgelösten Abtastzellen in dem zweiten Sensorteil anzeigt,

zweite Speichermittel zum Speichern von Sätzen von Überwachungsmittelausgangssignalen und Additionsmittelausgangssignalen, wobei jeder Satz ein Überwachungsmittelausgangssignal und ein Additionsmittelausgangssignal anzeigt, die, wenn sie gleichzeitig durch die ersten und zweiten Teile einer Sensormatrix mit darauf gelegtem Finger erzeugt werden, einem kleinen Leistendetail entsprechen, das sich an dem ersten Sensorteil befindet,

zweite Vergleichsmittel zum Vergleichen des Überwachungsmittelausgangssignals und Additionsmittelausgangssignals mit den Sätzen von Signalen, die in dem zweiten Speichermittel gespeichert sind, wobei das zweite Vergleichsmittel ein zweites Vergleichsmittelausgangssignal erzeugt, das die Gegenwart eines Leistendetails am ersten Sensorteil anzeigt, wenn das Überwachungsmittelausgangssignal und Additionsmittelausgangssignal mit einem der Sätze von Signalen übereinstimmen, die im Speichermittel gespeichert sind.

10. Ein System nach Anspruch 9, bei dem die Mittelpunkte benachbarter, individuell auslösbarer Abtastzellen (34) im wesentlichen um 100 µm voneinander getrennt sind, wobei der erste Sensorteil (31) vier Abtastzellen umfaßt, die ein Quadrat bilden, das im wesentlichen 200 µm breit ist, der zweite Sensorteil (33) sechsunddreißig Abtastzellen umfaßt, die ein Quadrat bilden, das im wesentlichen 600 µm breit ist, ein erster Satz und ein zweiter Satz von Signalen in dem zweiten Speichermittel gespeichert sind, der erste Satz von Signalen ein erstes Signal umfaßt, das einen ersten Sensorteil mit vier ausgelösten Zellen darstellt, und ein zweites Signal einen zweiten Sensorteil mit fünfzehn ausgelösten Zellen darstellt, der zweite Satz von Signalen ein drittes Signal umfaßt, das einen ersten Sensorteil ohne ausgelöste Zellen darstellt, und ein viertes Signal einen zweiten Sensorteil mit einundzwanzig ausgelösten Zellen darstellt.

11. Ein System nach Ansprüchen 3 und 9, bei dem die Verarbeitungsmittel (11, 32, 53) Kalkuliermittel zur Kalkulation der Abstände zwischen epidermalen Leistenschweißporen und epidermalen Leistendetails aufweisen.

12. Ein System nach einem der vorstehenden Ansprüche, bei dem die Sensorausgangverarbeitungsmittel (11, 32, 53) Mittel aufweisen, um die Abstände von einem jeden ersten Satz von Kennzeichen des abgetasteten Fingerabdruckmusters bis zu einem jeden zweiten Satz von Kennzeichen des abgetasteten Fingerabdruckmusters in vorbestimmter Reihenfolge zu kalkulieren, um eine geordnete Sequenz der kalkulierten Abstände zu erzeugen.

13. Ein System nach Anspruch 12, bei dem der erste Satz von Kennzeichen epidermale Leistenschweißporen und der zweite Satz von Kennzeichen epidermale Leistendetails umfassen.

14. Ein Verifizierungssystem nach Anspruch 12 oder Anspruch 13, bei dem die geordnete Sequenz mit einer gespeicherten, geordneten Sequenz verglichen und ein Autorisierungssignal erzeugt wird, wenn mehr als ein vorbestimmter Teil der ersten geordneten Sequenz mit der gespeicherten geordneten Sequenz oder einem Teil dieser übereinstimmt.

15. Eine Identifizierungsmethode zur Verwendung mit einem Fingerabdrucksensor (2), wobei der Fingerabdrucksensor eine Matrix (14, 35) individuell auslösbarer Abtastzellen (34) aufweist, von denen jede Abtastzelle durch Kontaktaufnahme oder Kontaktmangel der betroffenen Zelle mit den epidermalen Leisten des Fingerabdruckmusters eines auf den Sensor gelegten Fingers ausgelöst wird und jede ausgelöste Abtastzelle zu einem Sensorausgangssignal beiträgt, das die relativen Positionen der ausgelösten Abtastzellen anzeigt, wobei die Identifizierungsmethode die Stufen umfaßt, das Sensorausgangssignal zu verarbeiten, um ein verarbeitetes Signal zu erzeugen, das die relativen Positionen von Kennzeichen des abgetasteten Fingerabdruckmusters anzeigt, woraufhin das verarbeitete Signal in einem Speichermittel gespeichert wird, dadurch gekennzeichnet, daß die Kennzeichen Schweißporen umfassen, die sich in epidermalen Leisten befinden.

16. Eine Verifizierungsmethode zur Verwendung mit einem Fingerabdrucksensor (2), bei der der Fingerabdrucksensor eine Matrix (14, 35) individuell auslösbarer Abtastzellen (34) aufweist, von denen jede Abtastzelle durch Kontaktaufnahme oder Kontaktmangel der betroffenen Zelle mit der epidermalen Leiste des Fingerabdruckmusters eines auf den Sensor gelegten Fingers ausgelöst wird und jede ausgelöste Abtastzelle zu einem Sensorausgangssignal beiträgt, das die relativen Positionen der ausgelösten Abtastzellen anzeigt, wobei die Verifizierungsmethode die Stufen umfaßt, das Sensorausgangssignal zu verarbeiten, um ein verarbeitetes Signal zu erzeugen, das die relativen Positionen von Kennzeichen des abgetasteten Fingerabdruckmusters anzeigt, das verarbeitete Signal mit einem Satz zulässiger Signale zu vergleichen, die in einem Speichermittel gespeichert sind, und ein Autorisierungssignal zu erzeugen, wenn das verarbeitete Signal mit einem zulässigen Signal übereinstimmt, dadurch gekennzeichnet, daß die Kennzeichen Schweißporen umfassen, die sich in epidermalen Leisten befinden.

17. Eine Methode nach Anspruch 15 oder Anspruch 16, bei der das Verarbeitungsmittel die relativen Positionen jener nichtausgelösten Teile der Sensormatrix bestimmt, die die gleiche Größe wie epidermale Schweißporen haben und von ausgelösten Sensorzellen umgeben sind.

18. Eine Methode nach Anspruch 17, bei der die Stellen von Schweißporen bestimmt werden, indem die Signale von jeder Zelle (34) oder Gruppe von Zellen in der Matrix (14, 25) mit den Signalen von jeder benachbarten Zelle oder Gruppe von Zellen verglichen werden.

19. Eine Methode nach einem der Ansprüche 15 bis 18, die umfaßt, daß das Sensorausgangssignal gespeichert wird, daß das gespeicherte Sensorausgangssignal minus einmal der Anzahl von Abtastzellenpositionen, die der Weite einer Schweißpore im wesentlichen gleich sind, und plus einmal der Anzahl von Abtastzellenpositionen, die der Weite einer Schweißpore in zwei orthogonale Richtungen wesentlich gleich sind, verschoben wird, um vier verschobene Signale zu erzeugen, wobei die ersten und zweiten verschobenen Signale das Sensorausgangssignal sind, das minus einmal der Anzahl von Abtastzellenpositionen, die im wesentlichen der Weite einer Schweißzelle gleich sind, bzw. plus einmal der Anzahl von Abtastzellenpositionen, die im wesentlichen der Weite einer Schweißpore gleich sind, in eine erste Richtung verschoben wurde, dritte und vierte verschobene Signale das Sensorausgangssignal sind, das minus einmal der Anzahl von Abtastzellenpositionen, die im wesentlichen der Weite einer Schweißpore gleich sind, bzw. plus einmal der Anzahl von Abtastzellenpositionen, die im wesentlichen der Weite einer Schweißpore gleich sind, in eine zweite Richtung orthogonal zur ersten Richtung verschoben wurde, bzw. die Sensorausgangssignale zusammen mit dem ersten bzw. zweiten verschobenen Signal in erste und zweite EXKLUSIV-ODER-Operatoren eingegeben werden, um erste und zweite EXKLUSIV-ODER-Operatorausgangssignale zu erzeugen, das Sensorausgangssignal zusammen mit den dritten und vierten verschobenen Signalen in dritte und vierte EXKLUSIV-ODER-Operatoren eingegeben wird, um dritte und vierte EXKLUSIV-ODER-Operatorausgangssignale zu erzeugen, zwei der EXKLUSIV-ODER-Operatorausgangssignale in einen ersten UND-Operator eingegeben werden, um ein erstes UND-Operatorausgangssignal zu erzeugen, die beiden übrigen EXKLUSIV-ODER-Operatorausgangssignale in einen zweiten UND-Operator eingegeben werden, um ein zweites UND-Operatorausgangssignal zu erzeugen, und dann die ersten und zweiten UND-Operatorausgangssignale in einen dritten UND-Operator eingegeben werden, um ein Signal zu erzeugen, das jene epidermalen Schweißporen, die sich in den epidermalen Leisten befinden, anzeigt.

20. Eine Methode nach einem der Ansprüche 15 bis 18, die umfaßt, daß das Sensorausgangssignal gehalten wird, daß das gehaltene Sensorausgangssignal minus einmal der Anzahl von Abtastzellenpositionen, die der Weite einer Schweißpore im wesentlichen gleich sind, und minus zweimal der Anzahl von Abtastzellenpositionen, die der Weite einer Schweißpore in zwei orthogonalen Richtungen wesentlich gleich sind, verschoben wird, um vier verschobene Signale zu erzeugen, wobei die ersten und zweiten verschobenen Signale das Sensorausgangssignal sind, das minus einmal der Anzahl von Abtastzellenpositionen, die im wesentlichen der Weite einer Schweißzelle gleich sind, bzw. minus zweimal der Anzahl von Abtastzellenpositionen, die im wesentlichen der Weite einer Schweißpore gleich sind, in eine erste Richtung verschoben wurde, dritte und vierte verschobene Signale das Sensorausgangssignal sind, das minus einmal der Anzahl von Abtastzellenpositionen, die im wesentlichen der Weite einer Schweißpore gleich sind, bzw. minus zweimal der Anzahl von Abtastzellenpositionen, die im wesentlichen der Weite einer Schweißpore gleich sind, in eine zweite Richtung orthogonal zur ersten Richtung verschoben wurde, wobei das erste verschobene Signal zusammen mit dem Sensorausgangssignal bzw. dem zweiten verschobenen Signal in erste und zweite EXKLUSIV-ODER-Operatoren eingegeben wird, um erste und zweite EXKLUSIV-ODER-Operatorausgangssignale zu erzeugen, das dritte verschobene Signal zusammen mit dem Sensorausgangssignal bzw. vierten verschobenen Signal in dritte und vierte EXKLUSIV-ODER-Operatoren eingegeben wird, um dritte und vierte EXKLUSIV-ODER-Operatorausgangssignale zu erzeugen, zwei der EXKLUSIV-ODER-Operatorausgangssignale in einen ersten UND-Operator eingegeben werden, um ein erstes UND-Operatorausgangssignal zu erzeugen, die beiden übrigen EXKLUSIV-ODER-Operatorausgangssignale in einen zweiten UND-Operator eingegeben werden, um ein zweites UND-Operatorausgangssignal zu erzeugen, und dann die ersten und zweiten UND-Operatorausgangssignale in einen dritten UND-Operator eingegeben werden, um ein Signal zu erzeugen, das jene epidermalen Schweißporen, die sich in den epidermalen Leisten befinden, anzeigt.

21. Eine Methode nach Anspruch 19 oder Anspruch 20, bei der die Weite einer Schweißpore im wesentlichen dem Abstand zwischen dem Mittelpunkt benachbarter Abtastzellen gleich ist.

22. Eine Methode nach einem der Ansprüche 15 bis 21, bei der die Kennzeichen epidermale Leistendetails umfassen.

23. Ein System nach einem der Ansprüche 1 bis 14, das einen Sensor aufweist, der eine Matrix (14, 35) aus individuell auslösbaren Abtastzellen (34) und einer elastisch deformierbaren Membran (16) umfaßt, die einen geschlossenen Raum (17) über den individuell auslösbaren Abtastzellen definiert, bei dem der geschlossene Raum derart mit einem vorbestimmten Volumen eines wesentlich inkompressiblen Fluids (18) völlig gefüllt ist, damit das wesentlich inkompressible Fluid, wenn die Membranen durch einen aufgelegten Finger deformiert werden, auf die elastisch deformierbare Membran wirkt, um die epidermalen Täler des aufgelegten Fingers mindestens teilweise zu füllen, und bei dem die individuell auslösbaren Zellen (34) durch die Deformation der Membran (16) ausgelöst werden, um Ausgangssignale zu erzeugen, die jene Abtastzellen darstellen, die ausgelöst worden sind.

24. Ein System nach Anspruch 23, bei dem die undeformierte Membran (16) 5 bis 20 µm dick ist.

25. Ein System nach Anspruch 24, bei dem die undeformierte Membran (16) 5 bis 10 µm dick ist.

26. Ein System nach einem der Ansprüche 23 bis 25, bei dem das inkompressible Fluid (18) eine Silikonflüssigkeit ist.

27. Ein System nach einem der Ansprüche 23 bis 26, bei dem die Membranperipherie an einem elastisch deformierbaren Träger (15) befestigt ist.

28. Ein System nach einem der Ansprüche 1 bis 14, einschließlich eines Fingerabdrucksensors (2), der eine Matrix (14, 35) von individuell auslösbaren Abtastzellen (34) aufweist, bei dem jede der Zellen ein vibrierfähiges Abtastelement (35, 55), das auf die Kontaktaufnahme oder den Kontaktmangel der Zelle mit einer epidermalen Fingerabdruckleiste anspricht, und Treibmittel (48, 59, 51) umfaßt, um das Abtastelement (35, 55) zu vibrieren, und der Sensor ferner Erkennungsmittel (10, 11, 32, 53) umfaßt, die auf die Vibrationsausdehnung eines jeden der Abtastelemente (35, 55) ansprechen, um Ausgangssignale zu erzeugen, um solche Elemente, die mit einer epidermalen Leiste in Kontakt sind, von jenen Elementen zu unterscheiden, die keinen Kontakt haben.

29. Ein System nach Anspruch 28, bei dem das Treibmittel Mittel zur Zuleitung eines Treibersignals (51) an das Abtastelement (53) umfaßt und das Abtastelement vibriert, wenn ihm das Signal zugeleitet wird.

30. Ein System nach einem der Ansprüche 28 bis 29, bei dem das Abtastelement (35, 55) ein Balken oder ein elastischer Träger ist.

31. Ein System nach einem der Ansprüche 28 bis 30, bei dem das Treibersignal (51) eine Wechselspannung ist und das Abtastelement (35, 55) ein piezoelektrisches Material umfaßt.

32. Ein System nach einem der Ansprüche 28 bis 30, bei dem das Treibersignal durch ein vibrierendes Treibelement (48, 54) zugeleitet wird, das sich nahe dem Abtastelement befindet und dieses zur Resonanzschwingung veranlaßt.

33. Ein System nach Anspruch 32, bei dem das Treibelement ein piezoelektrisches Material umfaßt und das Treibmittel Mittel aufweist, um dem Treibelement (48, 54) einen Wechselstrom (51) anzulegen.

34. Ein System nach einem der Ansprüche 28 bis 33, bei dem das Abtastelement (35, 55) ein piezoelektrisches Material umfaßt.

35. Ein System nach Anspruch 29, bei dem das Treibersignal (51) ein oszillierendes Signal ist, dessen Frequenz der Resonanzfrequenz des vibrierfähigen Abtastelements (35, 55) im wesentlichen gleich ist.

36. Ein System nach Ansprüchen 31 oder 34, bei dem das Erkennungsmittel Mittel aufweist, die auf das elektrische Feld in dem Abtastelement (35, 55) ansprechen.

37. Ein System nach Anspruch 36, bei dem eine erste Eingangsseite des Abtastelements (35, 55) mit einer Wechselstromquelle, eine zweite Seite des Abtastelements mit Erde und das Erkennungsmittel mit dem Abtastelement an einem Punkt zwischen den ersten und zweiten Seiten des Abtastelements verbunden sind.

38. Ein System nach einem der Ansprüche 28 bis 37, bei dem die Zellen (34) in einer Mehrzahl von Reihen und Spalten angeordnet sind und das Treibmittel jede Spalte der Reihe nach mit Impulsen beaufschlagt und das Erkennungsmittel jeden Zellenausgang Reihe für Reihe abliest.

39. Ein System nach Ansprüchen 32, 33 und 34, bei dem das Treibelement eine erste, mit einer Wechselstromquelle verbundene Seite und eine zweite, mit Erde verbundene Seite hat und das Abtastelement mit einem Ausgang verbunden ist.

40. Ein System nach Anspruch 39, bei dem die Treib- und Abtastelemente verschiedene, interdigitierte, gabelförmige Elemente sind.

41. Ein System nach Anspruch 39, bei dem die Treib- und Abtastelemente verschiedene Elemente sind, das Abtastelement über dem Treibelement angeordnet und von diesem getrennt ist.

42. Ein System nach einem der Ansprüche 28 bis 41, bei dem das Abtastelement eine Lage eines Metalls (49) umfaßt.

43. Ein System nach einem der Ansprüche 32, 33 oder 39 bis 41, bei dem das Treibelement eine Lage eines Metalls (49) umfaßt.

44. Ein System nach einem der Ansprüche 23 bis 43, bei dem der Sensor ein Fingerabdrucksensor (2) ist und Teil eines elektrischen Stromkreises (2, 3, 9, 10, 11) auf einer Plastikkarte (12) bildet, wobei der elektrische Stromkreis der Karte ferner eine Mehrzahl diskreter Sensoreingangskomponenten (9) zur Stromversorgung des Sensors und Sensorausgangskomponenten (10) zum Empfang der Sensorausgangssignale und elektrische Kontakte (3) zur Stromversorgung an und Kommunikation mit dem Kartenstromkreis aufweist.

45. Ein System nach Anspruch 44, bei dem jede besagte Kartenstromkreiskomponente (2, 3, 9, 10, 11) nahe der neutralen Kartenbiegeachse angeordnet ist.

46. Ein System nach Anspruch 44, bei dem der Kartenstromkreis von einer Tragplatte (8) getragen wird, die einen höheren Elastizitätsmodul als der Plastikträger (7) hat.

47. Ein System nach Anspruch 44, bei dem das Verhältnis zwischen dem Elastizitätsmodul der Tragplatte und dem Elastizitätsmodul des Plastikträgers im Bereich von 100:1 zu 10:3 ist.

48. Ein System nach Anspruch 46, bei dem die Tragplatte eine anodisierte Nickellage (7) ist, die mit einer dünnen Lage Polyimid beschichtet ist.

49. Ein System nach einem der Ansprüche 44 bis 48, bei dem jede Sensoreingangskomponente oder -ausgangskomponente nahe ihrem Mittelpunkt durch weiche Lötstützpunkte (13) unterstützt ist, die jede Komponente mit dem Kartenstromkreis verbinden.

50. Ein System nach einem der Ansprüche 44 bis 49, das ferner einen bzw. Kartenempfänger aufweist, wobei der Kartenempfänger einen Schlitz (F) zur Aufnahme der Karte, elektrische Kontakte in dem Schlitz zur Verbindung mit den elektrischen Kartenkontakten (3) der Karte und Sensorzugriffsmittel (6) aufweist, damit ein Teil eines Fingers auf den Sensor (2) einer Karte gelegt werden kann, die sich in dem Kartenempfangsschlitz (4) befindet.

**51.** Ein System nach Anspruch 50, bei dem das Sensorzugriffsmittel eine Anordnung von Thermoelementen (20) aufweist, die um den Umfang des Zugriffmittels (6) herum angeordnet sind.

**52.** Ein System nach Anspruch 50, bei dem entweder die Karte oder der Kartenempfänger oder beide ferner Datenverarbeitungsmittel aufweisen.

## Revendications

**1.** Système d'identification comprenant un capteur d'empreintes digitales (2), le capteur d'empreintes digitales comprenant un réseau (14, 35) de cellules de détection actionnables individuellement (34), les cellules étant chacune actionnées par la présence ou l'absence de contact de la cellule respective (34) par les stries épidermiques de la forme d'empreinte digitale d'un doigt placé sur le capteur (2), chaque cellule de détection actionnée contribuant à un signal de sortie de capteur indicatif des positions relatives des cellules de détection actionnées, le système d'identification comprenant en outre un moyen de traitement de sortie de capteur (10, 11, 32, 53), le moyen de traitement de sortie de capteur comportant un moyen pour recevoir le signal de sortie de capteur et traiter le signal de sortie de capteur en vue de produire un signal traité indicatif des positions relatives de caractéristiques distinctives de la forme d'empreinte digitale détectée, le système d'identification comprenant en outre un moyen de mémoire (11, 32) pour mémoriser le signal traité et étant caractérisé en ce que le réseau de cellules de détection est suffisamment fin pour détecter les pores sudoraux situés dans les stries épidermiques, les caractéristiques distinctives de la forme d'empreinte digitale comportent les pores sudoraux dans les stries épidermiques, et le moyen de traitement comprend un moyen pour déterminer les positions relatives des parties non actionnées du réseau de détection qui sont de la même taille que les pores sudoraux épidermiques et qui sont entourées par des cellules de capteur actionnées.

**2.** Système de vérification comprenant un capteur d'empreintes digitales (2), le capteur d'empreintes digitales comprenant un réseau (14, 35) de cellules de détection actionnables individuellement (34), les cellules de détection étant chacune actionnées par la présence ou l'absence de contact de la cellule respective (34) par la strie épidermique de la forme d'empreinte digitale d'un doigt placé sur le capteur, chaque cellule de détection actionnée contribuant à un signal de sortie de capteur indicatif des positions relatives des cellules de détection actionnées, le système de vérification comprenant en outre un moyen de traitement de sortie de capteur (10, 11, 32, 53), le moyen de traitement de sortie de capteur comportant un moyen pour recevoir le signal de sortie de capteur et traiter le signal de sortie de capteur en vue de produire un signal traité indicatif des positions relatives de caractéristiques distinctives de la forme d'empreinte digitale détectée, le système de vérification comprenant en outre un moyen de comparaison pour comparer le signal traité à un ensemble de signaux autorisés mémorisés dans le moyen de mémoire du système, et un moyen d'autorisation pour produire un signal d'autorisation quand le signal traité correspond à un signal autorisé et étant caractérisé en ce que le réseau de cellules de détection est suffisamment fin pour détecter les pores sudoraux situés dans les stries épidermiques, les caractéristiques distinctives de la forme d'empreinte digitale comportent les pores sudoraux dans les stries épidermiques, et le moyen de traitement comprend un moyen pour déterminer les positions relatives des parties non actionnées du réseau de détection qui sont de la même taille que les pores sudoraux épidermiques et qui sont entourées par des cellules de capteur actionnées.

**3.** Système selon la revendication 1 ou la revendication 2, dans lequel le réseau de cellules de détection comprend des cellules dont la longueur et la largeur sont chacune sensiblement égales ou inférieures à 100 μm.

**4.** Système selon l'une quelconque des revendications précédentes, dans lequel les emplacements des pores sudoraux sont déterminés en comparant les signaux provenant de chaque cellule (34) ou groupe de cellules dans le réseau (14, 35) aux signaux provenant de chaque cellule ou groupe de cellules adjacent.

**5.** Système selon la revendication 4, dans lequel la largeur d'un pore sudoral d'une strie est sensiblement égale à un multiple entier prédéterminé de la distance entre les centres de cellules de détection adjacentes (34) du réseau et le moyen de traitement comprend : un moyen de mémoire (10) pour mémoriser le signal de sortie de capteur, un moyen de décalage de signal de sortie de capteur (22) dans lequel le signal de sortie de capteur est fourni, le moyen de décalage décalant le signal de sortie de capteur par moins le nombre multiple entier prédéterminé de positions de cellules de détection et par plus un nombre multiple entier prédéterminé de positions de cellules de détection dans deux sens orthogonaux en vue de produire quatre signaux décalés, les premier et deuxième signaux décalés étant le signal de sortie de capteur décalé par moins le nombre multiple entier prédéterminé de positions de cellules de détection et par plus un nombre multiple entier prédéterminé de positions de cellules de détection respectivement dans un premier sens, les troisième et quatrième signaux décalés étant le signal de sortie de capteur décalé par moins un nombre multiple entier prédéterminé de positions de cellules de détection et par plus un nombre multiple entier prédéterminé de positions de cellules de détection respectivement dans un deuxième sens orthogonal au premier sens, quatre opérateurs OU EXCLUSIF, le signal de sortie de capteur étant entré dans des premier et deuxième opérateurs OU EXCLUSIF avec les premier et deuxième signaux décalés respectivement en vue de produire des signaux de sortie des premier et deuxième opérateurs OU EXCLUSIF, le signal de sortie de capteur étant entré dans des troisième et quatrième opérateurs OU EXCLUSIF avec les troisième et quatrième signaux décalés respectivement en vue de produire des signaux de sortie des troisième et quatrième opérateurs OU EXCLUSIF, trois opérateurs ET, deux des signaux de sortie d'opérateurs OU EXCLUSIF étant entrés dans un premier opérateur ET et les signaux de sortie des deux autres opérateurs OU EXCLUSIF étant entrés dans un deuxième opérateur ET, les signaux de sortie des premier et deuxième opérateurs ET étant entrés dans un troisième opérateur ET en vue de produire un signal de sortie de moyen de traitement indicatif des pores sudoraux épidermiques situés dans les stries épidermiques.

**6.** Système selon la revendication 4, dans lequel la largeur d'un pore sudoral d'une strie est sensiblement égale à un multiple entier prédéterminé de la distance entre le centre de cellules de détection adjacentes (34) du réseau et le moyen de traitement comprend : un moyen de verrouillage (10) pour verrouiller le signal de sortie de capteur, un moyen de décalage de signal de sortie de capteur (22) dans lequel le signal de sortie de capteur est verrouillé, le moyen de décalage décalant le signal de sortie de capteur par moins le nombre multiple entier prédéterminé de positions de cellules de détection et par moins deux fois le nombre multiple entier prédéterminé de positions de cellules de détection dans deux sens orthogonaux en vue de produire quatre signaux décalés, les premier et deuxième signaux décalés étant le signal de sortie de capteur décalé par moins le nombre multiple entier prédéterminé de positions de cellules de détection et par moins deux fois le nombre multiple entier prédéterminé de positions de cellules de détection respectivement dans un premier sens, les troisième et quatrième signaux décalés étant le signal de sortie de capteur décalé par moins un nombre multiple entier prédéterminé de positions de cellules de détection et par moins deux fois le nombre multiple entier prédéterminé de positions de cellules de détection respectivement dans un deuxième sens orthogonal au premier sens, quatre opérateurs OU EXCLUSIF, le premier signal décalé étant entré dans des premier et deuxième opérateurs OU EXCLUSIF avec le signal de sortie de capteur et le deuxième signal décalé respectivement en vue de produire des signaux de sortie des premier et deuxième opérateurs OU EXCLUSIF, le troisième signal décalé étant entré dans des troisième et quatrième opérateurs OU EXCLUSIF avec le signal de sortie de capteur et le quatrième signal décalé respectivement en vue de produire des signaux de sortie des troisième et quatrième opérateurs OU EXCLUSIF, trois opérateurs ET, deux des signaux de sortie d'opérateurs OU EXCLUSIF étant entrés dans un premier opérateur ET et les signaux de sortie des deux autres opérateurs OU EXCLUSIF étant entrés dans un deuxième opérateur ET, les signaux de sortie des premier et deuxième opérateurs ET étant entrés dans un troisième opérateur ET en vue de produire un signal de sortie de moyen de traitement indicatif des pores sudoraux épidermiques situés dans les stries épidermiques.

**7.** Système selon la revendication 5 ou la revendication 6, dans lequel la distance entre les centres de cellules de détection adjacentes (34) est sensiblement égale à la largeur d'un pore sudoral de strie.

**8.** Système selon la revendication 5 ou la revendication 6, dans lequel les cellules de détection sont disposées en une pluralité de rangées parallèles et une pluralité de colonnes parallèles (37, 68) orthogonales aux rangées de cellules de détection, et le signal de sortie de capteur est décalé parallèlement aux sens des rangées de cellules de détection et des colonnes de cellules de détection.

**9.** Système selon l'une quelconque des revendications 1 à 8, dans lequel les caractéristiques distinctives de forme d'empreinte digitale comportent de menus détails des stries épidermiques et le moyen de traitement (10, 11, 32, 53) comprend : un moyen de contrôle pour contrôler si une première partie (31) du réseau de détection a été actionnée, la largeur de la première partie de capteur étant égale ou inférieure à la largeur d'une strie épidermique, le moyen de contrôle produisant un signal de sortie de moyen de contrôle indicatif de l'état des cellules de détection actionnables individuellement à l'intérieur de la première partie de capteur (33), un moyen d'addition pour déterminer le nombre total de cellules de détection actionnées à l'intérieur d'une deuxième partie du réseau de capteur, la largeur de la deuxième partie de capteur étant égale ou inférieure à la distance séparant les lignes médianes des stries épidermiques adjacentes et ayant la première partie de capteur en son centre, le moyen d'addition produisant un signal de sortie de moyen d'addition indicatif du nombre de cellules de détection actionnées à l'intérieur de la deuxième partie de capteur,

un deuxième moyen de mémoire pour mémoriser des ensembles de signaux de sortie de moyen de contrôle et de signaux de sortie de moyen d'addition, chaque ensemble étant indicatif d'un signal de sortie de moyen de contrôle et d'un signal de sortie de moyen d'addition qui, lorsqu'ils sont produits en même temps par les première et deuxième parties d'un réseau de capteur sur lequel est placé un doigt, correspondent à un menu détail de strie située au niveau de la première partie de capteur,
un deuxième moyen de comparaison pour comparer le signal de sortie de moyen de contrôle et le signal de sortie de moyen d'addition aux ensembles de signaux mémorisés dans le deuxième moyen de mémoire, le deuxième moyen de comparaison produisant un deuxième signal de sortie de moyen de comparaison indicatif de la présence d'un menu détail de strie au niveau de la première partie de capteur quand le signal de sortie de moyen de contrôle et le signal de sortie de moyen d'addition correspondent à l'un des ensembles de signaux mémorisés dans le moyen de mémoire.

10. Système selon la revendication 9, dans lequel les centres de cellules de détection actionnables individuellement adjacentes (34) sont sensiblement écartés de 100 μm, la première partie de capteur (31) comprend quatre cellules de détection formant un carré de sensiblement 200 μm de largeur, la deuxième partie de capteur (33) comprend trente-six cellules de détection formant un carré de sensiblement 600 μm de largeur, un premier ensemble et un deuxième ensemble de signaux sont mémorisés dans le deuxième moyen de mémoire, le premier ensemble de signaux comprenant un premier signal représentant une première partie de capteur ayant quatre cellules actionnées et un deuxième signal représentant une deuxième partie de capteur ayant quinze cellules actionnées, le deuxième ensemble de signaux comprenant un troisième signal représentant une première partie de capteur n'ayant pas de cellules actionnées et un quatrième signal représentant une deuxième partie de capteur ayant vingt-et-une cellules actionnées.

11. Système selon les revendications 3 et 9, dans lequel le moyen de traitement (11, 32, 53) comporte un moyen de calcul pour calculer les distances entre les pores sudoraux de stries épidermiques et des menus détails de stries épidermiques.

12. Système selon l'une quelconque des revendications précédentes, dans lequel le moyen de traitement de sortie de capteur (11, 32, 53) comporte un moyen pour calculer dans un ordre prédéterminé les distances depuis chacune d'un premier ensemble de caractéristiques distinctives de la forme d'empreinte digitale détectée jusqu'à chacune d'un deuxième ensemble de caractéristiques distinctives de la forme d'empreinte digitale détectée en vue de produire une séquence ordonnée des distances calculées.

13. Système selon la revendication 12, dans lequel le premier ensemble de caractéristiques distinctives comprend des pores sudoraux de stries épidermiques et le deuxième ensemble de caractéristiques distinctives comprend des menus détails de stries épidermiques.

14. Système de vérification selon la revendication 12 ou la revendication 13, dans lequel la séquence ordonnée est comparée à une séquence ordonnée mémorisée, et un signal d'autorisation est produit quand plus d'une partie prédéterminée de la première séquence ordonnée correspond à la ou à une partie de la séquence ordonnée mémorisée.

15. Procédé d'identification destiné à être utilisé avec un capteur d'empreintes digitales (2), le capteur d'empreintes digitales comprenant un réseau (14, 35) de cellules de détection actionnables individuellement (34), les cellules de détection étant chacune actionnées par la présence ou l'absence de contact de la cellule respective par les stries épidermiques de la forme d'empreinte digitale d'un doigt placé sur le capteur, chaque cellule de détection actionnée contribuant à un signal de sortie de capteur indicatif de positions relatives des cellules de détection actionnées, le procédé d'identification comprenant les étapes de traitement du signal de sortie de capteur en vue de produire un signal traité indicatif des positions relatives de caractéristiques distinctives de la forme d'empreinte digitale détectée, puis de mémorisation du signal traité dans un moyen de mémoire, caractérisé en ce que les caractéristiques distinctives comportent les pores sudoraux situés dans les stries épidermiques.

16. Procédé de vérification destiné à être utilisé avec un capteur d'empreintes digitales (2), le capteur d'empreintes digitales comprenant un réseau (14, 35) de cellules de détection actionnables individuellement (34), les cellules de détection étant chacune actionnées par la présence ou l'absence de contact de la cellule respective par la strie épidermique de la forme d'empreinte digitale d'un doigt placé sur le capteur, chaque cellule de détection actionnée contribuant à un signal de sortie de capteur indicatif des positions relatives des cellules de détection actionnées, le procédé de vérification comprenant les étapes de traitement du signal de sortie de capteur en vue de produire un signal traité indicatif des positions relatives de caractéristiques distinctives de la forme d'empreinte digitale détectée, de comparaison du signal traité à un ensemble de signaux autorisés mémorisés dans un moyen de mémoire, et de production d'un signal d'autorisation quand le signal traité correspond à un signal autorisé, caractérisé en ce que les caractéristiques distinctives comportent les pores sudoraux situés dans les stries épidermiques.

17. Procédé selon la revendication 15 ou la revendication 16, dans lequel le moyen de traitement détermine les positions relatives des parties non actionnées du réseau de détection qui sont de la même taille que les pores sudoraux épidermiques et qui sont entourées par des cellules de capteur actionnées.

18. Procédé selon la revendication 17, dans lequel les emplacements des pores sudoraux sont déterminés en comparant les signaux provenant de chaque cellule (34) ou groupe de cellules dans le réseau (14, 25) aux signaux provenant de chaque cellule ou groupe de cellules adjacent.

19. Procédé selon l'une quelconque des revendications 15 à 18, comprenant la mémorisation du signal de sortie de capteur, le décalage du signal de sortie de capteur mémorisé par moins une fois le nombre de positions de cellules de détection sensiblement égales à la largeur d'un pore sudoral et par plus une fois le nombre de positions de cellules de détection sensiblement égales à la largeur d'un pore sudoral dans deux sens orthogonaux en vue de produire quatre signaux décalés, les premier et deuxième signaux décalés étant le signal de sortie de capteur décalé par moins une fois le nombre de positions de cellules de détection sensiblement égales à la largeur d'un pore sudoral et par plus une fois le nombre de positions de cellules de détection sensiblement égales à la largeur d'un pore sudoral respectivement dans un premier sens, les troisième et quatrième signaux décalés étant le signal de sortie de capteur décalé par moins une fois le nombre de positions de cellules de détection sensiblement égales à la largeur d'un pore sudoral et par plus une fois le nombre de positions de cellules de détection sensiblement égales à la largeur d'un pore sudoral respectivement dans un deuxième sens orthogonal au premier sens, l'entrée des signaux de sortie de capteur dans des premier et deuxième opérateurs OU EXCLUSIF avec les premier et deuxième signaux décalés respectivement en vue de produire des signaux de sortie des premier et deuxième opérateurs OU EXCLUSIF, l'entrée du signal de sortie de capteur dans des troisième et quatrième opérateurs OU EXCLUSIF avec les troisième et quatrième signaux décalés respectivement en vue de produire des signaux de sortie des troisième et quatrième opérateurs OU EXCLUSIF, l'entrée de deux des signaux de sortie d'opérateurs OU EXCLUSIF dans un premier opérateur ET en vue de produire un premier signal de sortie d'opérateur ET, l'entrée des signaux de sortie des deux opérateurs OU EXCLUSIF restants dans un deuxième opérateur ET en vue de produire un signal de sortie de deuxième opérateur ET puis l'entrée des signaux de sortie des premier et deuxième opérateurs ET dans un troisième opérateur ET en vue de produire un signal indicatif des pores sudoraux épidermiques situés dans les stries épidermiques.

20. Procédé selon l'une quelconque des revendications 15 à 18, comprenant le verrouillage du signal de sortie de capteur, le décalage du signal de sortie de capteur verrouillé par moins une fois le nombre de positions de cellules de détection sensiblement égales à la largeur d'un pore sudoral et par moins deux fois le nombre de cellules de détection sensiblement égales à la largeur d'un pore sudoral dans deux sens orthogonaux en vue de produire quatre signaux décalés, les premier et deuxième signaux décalés étant le signal de sortie de capteur décalé par moins une fois le nombre de positions de cellules de détection sensiblement égales à la largeur d'un pore sudoral et par moins deux fois le nombre de positions de cellules de détection sensiblement égales à la largeur d'un pore sudoral respectivement dans un premier sens, les troisième et quatrième signaux décalés étant le signal de sortie de capteur décalé par moins une fois le nombre de positions de cellules de détection sensiblement égales à la largeur d'un pore sudoral et par moins deux fois le nombre de positions de cellules de détection sensiblement égales à la largeur d'un pore sudoral respectivement dans un deuxième sens orthogonal au premier sens, l'entrée du premier signal décalé dans des premier et deuxième opérateurs OU EXCLUSIF avec le signal de sortie de capteur et le deuxième signal décalé respectivement en vue de produire des signaux de sortie des premier et deuxième opérateurs OU EXCLUSIF, l'entrée du troisième signal décalé dans des troisième et quatrième opérateurs OU EXCLUSIF avec le signal de sortie de capteur et le quatrième signal décalé respectivement en vue de produire des signaux de sortie des troisième et quatrième opérateurs OU EXCLUSIF, l'entrée de deux des signaux de sortie d'opérateurs OU EXCLUSIF dans un premier opérateur ET en vue de produire un signal de sortie de premier opérateur ET, l'entrée des signaux de sortie des deux opérateurs OU EXCLUSIF restants dans un deuxième opérateur ET en vue de produire un signal de sortie de deuxième opérateur ET, et l'entrée des signaux de sortie des premier et deuxième opérateurs ET dans un troisième opérateur ET en vue de produire un signal indicatif des pores sudoraux épidermiques situés dans les stries épidermiques.

21. Procédé selon la revendication 19 ou la revendication 20, dans lequel la largeur d'un pore sudoral est sensiblement égale à la distance entre les centres de cellules de détection adjacentes.

22. Procédé selon l'une quelconque des revendications 15 à 21, dans lequel les caractéristiques distinctives comportent de menus détails des stries épidermiques.

23. Procédé selon l'une quelconque des revendications 1 à 14, comportant un capteur comprenant un réseau (14, 35) de cellules de détection actionnables individuellement (34) et une membrane élastiquement déformable (16) définissant un espace étanche (17) au-dessus des cellules de détection actionnables individuellement, dans lequel l'espace étanche est entièrement rempli d'un volume présélectionné d'un fluide sensiblement incompressible (18) de telle sorte qu'à la déformation de la membrane par application d'un doigt sur celle-ci, le fluide sensiblement incompressible agit sur la membrane élastiquement déformable de manière à au moins remplir partiellement les vallées épidermiques du doigt appliqué, et dans lequel les cellules actionnables individuellement (34) sont actionnées par la déformation de la membrane (16) pour produire des signaux de sortie représentatifs des cellules de détection qui ont été actionnées.

24. Procédé selon la revendication 23, dans lequel la membrane non déformée (16) est de 5 à 20 μm d'épaisseur.

25. Procédé selon la revendication 24, dans lequel la membrane non déformée (16) est de 5 à 10 μm d'épaisseur.

26. Procédé selon l'une quelconque des revendications 23 à 25, dans lequel le fluide incompressible (18) est un liquide de silicone.

27. Système selon l'une quelconque des revendications 23 à 26, dans lequel la périphérie de la membrane est fixée à un support élastiquement déformable (15).

28. Système selon l'une quelconque des revendications 1 à 14 comportant un capteur d'empreintes digitales (2) comprenant un réseau (14, 35) de cellules de détection actionnables individuellement (34), dans lequel les cellules comportent chacune un élément de détection vibrant (35, 55) sensible à la présence ou l'absence de contact de la cellule par une strie épidermique d'une empreinte digitale et un moyen de commande (48, 59, 51) pour faire vibrer l'élément vibrant (35,55), et le capteur comprend en outre un moyen de détection (10, 11, 32, 53) sensible à l'étendue de la vibration de chacun des éléments de détection (35, 55) en vue de produire des signaux de sortie distinguant les éléments contactés par une arête épidermique de ceux non ainsi contactés.

29. Système selon la revendication 28, dans lequel le moyen de commande comprend un moyen pour fournir un signal de commande (51) à l'élément de détection (53) et l'élément de détection vibre quand le signal lui est fourni.

30. Système selon l'une quelconque des revendications 28 à 29, dans lequel l'élément de détection (35, 55) est une tige ou un support élastique.

31. Système selon l'une quelconque des revendications 28 à 30, dans lequel le signal de commande (51) est une tension alternative et l'élément de détection (35, 55) comporte une matière piézo-électrique.

32. Système selon l'une quelconque des revendications 28 à 30, dans lequel le signal de commande est fourni par un élément de commande vibrant (48, 54) situé près de l'élément de détection le forçant à vibrer de concert.

33. Système selon la revendication 32, dans lequel l'élément de commande comporte une matière piézo-électrique et le moyen de commande comporte un moyen pour appliquer une tension alternative (51) à l'élément de commande (48, 54).

34. Système selon l'une quelconque des revendications 28 à 33, dans lequel l'élément de détection (35, 55) comporte une matière piézo-électrique.

35. Système selon la revendication 29, dans lequel le signal de commande (51) est un signal oscillant dont la fréquence est sensiblement égale à la fréquence de résonance de l'élément de détection vibrant (35,55).

**36.** Système selon les revendications 31 ou 34, dans lequel le moyen de détection comprend un moyen sensible au champ électrique dans l'élément de détection (35, 55).

**37.** Système selon la revendication 36, dans lequel une première extrémité d'entrée de l'élément de détection (35, 55) est connectée à une source de tension alternative, une deuxième extrémité de l'élément de détection est connectée à la terre, et le moyen de détection est connecté à l'élément de détection à un point entre les première et deuxième extrémités de l'élément de détection.

**38.** Système selon l'une quelconque des revendications 28 à 37, dans lequel les cellules (34) sont disposées en une pluralité de rangées et de colonnes et le moyen de commande envoie des impulsions à chaque colonne l'une après l'autre et le moyen de détection lit chaque sortie de cellule rangée par rangée.

**39.** Système selon les revendications 32, 33 et 34, dans lequel l'élément de commande a une première extrémité connectée à une alimentation de tension alternative et une deuxième extrémité connectée à la terre, et l'élément de détection est connecté à une sortie.

**40.** Système selon la revendication 39, dans lequel les éléments de commande et de détection sont des éléments en forme de fourche interdigités, distincts.

**41.** Système selon la revendication 39, dans lequel les éléments de commande et de détection sont des éléments distincts, l'élément de détection est situé au-dessus de l'élément de commande et séparé de celui-ci.

**42.** Système selon l'une quelconque des revendications 28 à 41, dans lequel l'élément de détection comporte une couche d'un métal (49).

**43.** Système selon l'une quelconque des revendications 32, 33 ou 39 à 41, dans lequel l'élément de commande comporte une couche d'un métal (49).

**44.** Système selon l'une quelconque des revendications 23 à 43, dans lequel le capteur est un capteur d'empreintes digitales (2) et fait partie d'un circuit électrique (2, 3, 9, 10, 11) sur une carte plastique (12), et le circuit électrique de carte comprend en outre une pluralité de composants d'entrée de capteur discrets (9) pour fournir de l'énergie au capteur, et des composants de sortie de capteur (10) pour recevoir les signaux de sortie de capteur et des contacts électriques (3) pour fournir de l'énergie au circuit de carte et communiquer avec celui-ci.

**45.** Système selon la revendication 44, dans lequel chaque dit composant de circuit de carte (2, 3, 9, 10, 11) est situé près de l'axe de torsion neutre de la carte.

**46.** Système selon la revendication 44, dans lequel le circuit de carte est supporté sur une feuille de support (8) ayant un module d'élasticité supérieur à celui du porteur en plastique (7).

**47.** Système selon la revendication 44, dans lequel le rapport du module d'élasticité de la feuille de support sur le module d'élasticité du porteur en plastique se situe dans la plage de 100:1 à 10:3.

**48.** Système selon la revendication 46, dans lequel la feuille de support est une couche de nickel anodisée (7) revêtue d'une fine couche de polyimide.

**49.** Système selon l'une quelconque des revendications 44 à 48, dans lequel chaque composant d'entrée ou composant de sortie de capteur est supporté près de son centre par des plots de brasage tendre (13) qui connectent chaque composant au circuit de carte.

**50.** Système selon l'une quelconque des revendications 44 à 49, et comprenant en outre un (des) récepteur(s) de carte(s), le récepteur de carte ayant une fente (F) pour recevoir la carte, des contacts électriques dans la fente destinés à se connecter aux contacts électriques (3) de la carte et un moyen d'accès au capteur (6) permettant de placer une partie d'un doigt sur le capteur (2) d'une carte placée dans la fente de récepteur de carte (4).

**51.** Système selon la revendication 50, dans lequel le moyen d'accès au capteur comporte un réseau de thermocouples (20) disposés autour du périmètre du moyen d'accès (6).

**52.** Système selon la revendication 50, dans lequel l'un ou l'autre de la carte ou du récepteur de carte, ou les deux, comprennent en outre des moyens de traitement de données.

FIG. 1

FIG. 3

FIG. 4

FIG. 2(a)

FIG. 2(b)

9,10

8

13

## FIG. 5

13

## FIG. 6

FIG. 7

FIG. 8

FIG. 9

EP 0 699 325 B1

15    17    16    UNSTRESSED MEMBRANE

9,10

## FIG. 10(a)

18    16    MEMBRANE DISTORTED

## FIG. 10(b)

FIG. 12

(a) (b) (c) (d) (e) (f)

36 37 38 46 35 48 40

36 39 40 46 35
37 38 48

(a) (b) (c) (d) (e) (f) (g)

FIG. 11

EP 0 699 325 B1

FIG. 13(a)

FIG. 13(b)

55  64  61  63  60  54

66

60  62  63  64

FIG.  14

66  64  63

63

60

63

64

63

60

62

FIG.  15

FIG. 16(a)

FIG. 16(b)

FIG. 17

VIBRATION MODE

FIG. 19

INPUT BUS  OUTPUT BUS  70

FIG. 18(a)

INPUT BUS  70

OUTPUT BUS

FIG. 18(b)

INPUT BUS  70

OUTPUT BUS

FIG. 18(c)

EP 0 699 325 B1

FIG. 20

FIG. 21

FIG. 22

FIG. 23

SOLDERED JOINT

INSULATING LAYER

UPPER METALISATION LAYER

SUBSTRATE 2 (DISOLVED)

LOWER METALISATION LAYER

SUBSTRATE 1

## FIG. 24

23

2

11

3

## FIG. 25

FIG. 26

LOCATE FINGER
TIP

MEASURE WIDTH
AT 5mm FROM TIP
SAVE AS W1

MEASURE WIDTH
AT 17·8mm FROM TIP
SAVE AS W2

SAVE AS FINGER WIDTHS
W1, W2

FIG. 27

```
┌─────────────────┐
│  CAPTURE RAW    │
│  DATA  (RD)     │
└─────────────────┘
        │
        ▼
┌─────────────────┐
│  COPY  RAW      │
│  DATA   (CD)    │
└─────────────────┘
        │
        ▼
┌─────────────────┐         ┌─────────────────┐
│ SHIFT CD -1X,0Y │────────▶│  SAVE  AS  S1   │─────┐
│  XOR ADD RD     │         └─────────────────┘     │
└─────────────────┘                                 │
        │                                           │
        ▼                                           │
┌─────────────────┐         ┌─────────────────┐     │
│ SHIFT CD +1X,0Y │────────▶│  SAVE  AS  S2   │─────┤
│  XOR ADD RD     │         └─────────────────┘     │
└─────────────────┘                                 │
        │                                           │
        ▼                                           │
┌─────────────────┐         ┌─────────────────┐     │
│ SHIFT CD 0X,+1Y │────────▶│  SAVE  AS  S3   │─────┤
│  XOR ADD RD     │         └─────────────────┘     │
└─────────────────┘                                 │
        │                                           │
        ▼                                           │
┌─────────────────┐         ┌─────────────────┐     │
│ SHIFT CD 0X,-1Y │────────▶│  SAVE  AS  S4   │─────┤
│  XOR ADD RD     │         └─────────────────┘     │
└─────────────────┘                                 │
                                                    │
           ┌───────────────────────────────┐        │
           │ S1 AND S2  AND  S3 AND S4     │◀───────┘
           └───────────────────────────────┘
                          │
                          ▼
           ┌───────────────────────────────┐
           │  SAVE AS CO-ORDINATES         │
           └───────────────────────────────┘
```

FIG.   28

FIG. 29

EP 0 699 325 B1

DATA
PROCESS

FIG. 30

FIG. 31

LOCATE 2×2 PIXEL AREA OF RAW DATA = 4×0

SEARCH AREA AROUND 2×2 AREA FOR 4×8 PIXEL AREA OF SOLID (1) DATA

IF CONDITIONS NOT MET

IF CONDITIONS MET SAVE CO-ORDINATES

LOCATE 2×2 PIXEL AREA OF RAW DATA = 4×1

SEARCH AREA AROUND 2×2 AREA FOR 4×8 PIXEL AREA OF NOT SOLID (0) DATA

IF CONDITIONS MET SAVE CO-ORDINATES

IF CONDITIONS NOT MET

EP 0 699 325 B1

```
┌─────────────────────┐      ┌─────────────────────┐                    ┌─────────────────────┐
│ LOCATE 2x2 PIXEL    │      │ SEARCH 6x6 AREA     │─────────────────→  │ IF CONDITIONS NOT   │
│ AREA OF RAW DATA = 0│─────→│ AROUND 2x2 PIXEL    │                    │ MET                 │
└─────────────────────┘      │ AREA FOR SOLID (1)  │                    └─────────────────────┘
                             │ DATA                │
                             │                     │─────────────────→  ┌─────────────────────┐
                             └─────────────────────┘                    │ IF CONDITIONS MET   │
                                                                        │ SAVE CO-ORDINATES   │
                                                                        └─────────────────────┘

┌─────────────────────┐      ┌─────────────────────┐                    ┌─────────────────────┐
│ LOCATE 2x2 PIXEL    │      │ SEARCH 6x6 AREA     │─────────────────→  │ IF CONDITIONS MET   │
│ AREA OF RAW DATA    │─────→│ AROUND 2x2 PIXEL    │                    │ SAVE CO-ORDINATES   │
│ = 4x1               │      │ AREA FOR NOT SOLID  │                    └─────────────────────┘
└─────────────────────┘      │ (0) DATA            │
                             │                     │─────────────────→  ┌─────────────────────┐
                             └─────────────────────┘                    │ IF CONDITIONS NOT   │
                                                                        │ MET                 │
                                                                        └─────────────────────┘
```

FIG. 32

ULA

$$\Sigma 3,3 + 4,3 + 3,4 + 4,4 = 1$$
OR
$$\Sigma 3,3 + 4,3 + 3,4 + 4,4 = 0$$

COLUMN

1 2 3 4 5 6 7 8

ROW

1 2 3 4 5 6 7 8

0   1

ULA

WHEN $\Sigma 3/4 = 0$:
$$\Sigma 1,1 + \ldots + 6,6 = 11$$
OR
WHEN $\Sigma 3/4 = 1$:
$$\Sigma 1,1 + \ldots + 6,6 = 15$$

FIG. 33

FIG. 34(a)

FIG. 34(b)

EP 0 699 325 B1

FIG. 35

49

FIG. 36

```
┌─────────────────┐
│  CAPTURE RAW    │
│  DATA (RD)      │
└─────────────────┘
         │
         ▼
┌─────────────────┐        ┌─────────────────────┐
│ COUNT HIGHS (1) │───────▶│  SAVE MAX COUNT     │──────────┐
│ IN X DIRECTION  │        │  SAVE MIN  COUNT    │          │
└─────────────────┘        └─────────────────────┘          │
         │                                                    │
         ▼                                                    │
┌─────────────────┐        ┌─────────────────────┐          │
│ COUNT HIGHS (1) │───────▶│  SAVE MAX COUNT     │──────────┤
│ IN Y DIRECTION  │        │  SAVE MIN  COUNT    │          │
└─────────────────┘        └─────────────────────┘          │
         │                                                    │
         ▼                                                    │
┌─────────────────┐        ┌─────────────────────┐          │
│ COUNT HIGHS (1) │───────▶│  SAVE MAX COUNT     │──────────┤
│ IN +XY DIRECTION│        │  SAVE MIN  COUNT    │          │
└─────────────────┘        └─────────────────────┘          │
         │                                                    │
         ▼                                                    │
┌─────────────────┐        ┌─────────────────────┐          │
│ COUNT HIGHS (1) │───────▶│  SAVE MAX COUNT     │──────────┤
│ IN -YX DIRECTION│        │  SAVE MIN  COUNT    │          │
└─────────────────┘        └─────────────────────┘          │
                                                             │
                                                             ▼
                    ┌─────────────────────────────────────────┐
                    │  CLASSIFY FINGERPRINT PATTERN            │
                    └─────────────────────────────────────────┘
```

FIG. 37

FIG. 38